# EUROPEAN PATENT APPLICATION

(11) **EP 1 146 739 A2**
(43) Date of publication of application: **17.10.2001**
(21) Application number: 01303239.6
(22) Date of filing: 05.04.2001
(51) Int. Cl.: H04N 7/08

(54) **A method and system for providing additional information to a user receiving a video or audio program**

(30) Priority: 14.04.2000 US 197314 P; 17.05.2000 US 573620
(71) Applicant: ACTV, Inc., New York, NY 10003-1604 (US)
(72) Inventor: Wolzien, Thomas R., Granview, New York, NY 10980 (US)
(74) Representative: Needle, Jacqueline

(57) **Abstract**

The system and method may provide directions to the user of an electronic signal such as a radio or television broadcast. The directions guide the user from a current location to a destination associated with the electronic signal by accessing an address embedded within, or transmitted in conjunction with, the electronic signal. The address provides an indication to an online information provider an/or a database within which a listing of locations for a destination are provided. By comparing the various locations of the destination against the current location of the user, determined using Global Positioning System (GPS) data, the system is able to determine which location of the destination is closest and to provide appropriate directions. Maps and various other directional tools, including verbal directions and visual directions, may be generated. Reverse directions may also be generated from a destination to other predetermined way-points such as home, office or starting point.

## Description

The present invention relates to a method and system for providing additional information related to a program provided in an electronic signal.

For example, an online service access system is described which provides direct, automated access to an online information provider through an address embedded in an electronic program signal such as a television or radio signal which is either live or prerecorded.

Heretofore, media receiving and display systems such as television and radio receivers have been linked to interactive information providers in only very limited ways. Some systems exist which permit the exchange of digital information with the viewer of a television program over, or in combination with, a television signal, but such systems have provided access to a single information source available from, for example, the broadcast or cable television operator. In such systems, the selection of information services has been entirely within the control of the broadcast or cable television operator.

At the same time, some television and radio broadcasters have begun to announce an Internet address for viewer enquiries during the course of program transmission. Access to this Internet address requires the user to utilize a computer. No system yet exists which provides automated and direct user access to online information providers through an address embedded in a video or audio program signal while also providing directional indicators to a location associated with the content of the program signal.

The present invention seeks to provide a system which reduces the disadvantages of those already available.

According to a first aspect of the present invention there is provided a system for providing a user access to additional information from an information source, including directions from a current location, related to a program provided in an electronic signal, comprising: at least one receiver for receiving said electronic signal and an address; a means, operably connected to the receiver, for decoding said address; a user interface, wherein the user enters commands to access said additional information; means for establishing a link, upon said user command, with an information source associated with said address; and a direction determination device, wherein said direction determination device determines directions to one or more destinations, identified by said information source.

The recent explosion in the usage of online information services through digital networks such as the Internet, Prodigy ® , America Online ® and Compuserve ® , for example, indicate that the demand for access to readily available up-to-date or detailed information is increasing. The viewer of a video program, whether the program is received through broadcast or cable means, or from a pre-recorded medium, may often seek to discover more information which relates to a topic presented in the video program. Since television programs and recordings are of finite length, they often do not contain all the related information which a consumer may require. Additionally, the information contained in a television program may not be timely. A system of an embodiment of the invention is able to automatically and directly provide access to an online information provider through an address which can be extracted from an audio or video program such as a television program, commercial or news story. With such a system, several benefits may be obtained. For example, adults and children viewing an educational or historical video program could readily locate additional materials provided in text or still picture by the producers of the video program by accessing more information from the producers digitally through the online address. Consumers seeking more information about a specific advertised product could readily find such information by accessing the online address of an information provider designated by the advertiser. News program viewers seeking specific information from news stories or more detailed information could easily access such information through an online information provider designated by the producers of such a program.

An online service access system may be used to provide other benefits to consumers, business owners, and the government. For example, an automobile manufacturer could make information available directly to a consumer through an online address embedded in a video presentation so that the consumer could reach its online site quickly to ask for more information, to request a test drive, or to purchase parts. Through such a system, a grocery store could advertise and receive orders through its online site from customers for home delivery, or for other shopping needs. A catalog retailer could use such a system, after airing a commercial, to provide rapid access to consumers to its catalog in online form and to enable orders to be placed readily through its online site. A record company could use such a system to enable customers to order a recording while listening to a song or viewing a music video. Government agencies, e.g., the Internal Revenue Service, military recruiters, or health agencies, for example, could use such a system to provide consumers with readily available information following the airing of public service announcements regarding regulations, programs, or public health concerns, e.g., cancer, AIDS, and heart disease. Educators and students could use such system to obtain more detailed or up-to-the-minute information from online bulletin boards and databases regarding topics presented in a video program, even though the program was recorded some time in the past.

Additionally, heretofore, broadcast radio and television programs have been limited in providing information related to goods and/or services presented during programs or advertisements. These limitations are often due to the fact that programmers do not have time within programming schedules to identify where providers of such goods/services are located or contact information. Since advertisements are commonly priced based upon their time length, hour of the day, and listening audience, advertisers generally do not provide location and contact details during their slotted time due to economic considerations. For example, a chain of fast-food restaurants often does not desire to pay for the "air time" necessary to identify every location of their various facilities. Identifying every restaurant location is undesirable because it is expensive, in that additional "air time" is needed to identify numerous facilities (especially in a large metropolitan area), and because most users of a radio program or viewers of a television program will not pay attention to a long advertisement reciting numerous and, in most instances, irrelevant restaurant locations.

Similarly, radio programmers commonly do not provide credits to the various recording artists aired on their programs. Instead of taking precious seconds to identify an artist, the album on which a present song is recorded, and record store locations, radio programmers prefer to fill such time slots with revenue generating advertisements. Thus, currently available radio programming systems do not allow advertisers, artists, and programmers to efficiently provide detailed information pertaining to the content of their radio transmissions.

A system according to the invention may meet these disadvantages of the prior art by combining the capabilities of GPS positioning, online information providers, and the convergence of online information providers with electronic signals to provide additional valuable information. Such a system preferably allows a programmer or advertiser to provide links to information content (such as directions) associated with an electronic signal which may be accessed from a database and then presented as directions to the user.

In an embodiment, a media online service access system of the invention may link video and audio program content with online information signal content to provide direct, automated, user access from a media program, such as a received or pre-recorded television or radio (audio) signal, to an online information provider through a link provided in the media program. The access system receives an electronic signal representing a video or audio program or a combined audio/video program from an available medium (e.g., broadcast and cable television and radio, or a pre-recorded medium such as a tape or disc). Embedded in the electronic signal, for example, in the vertical blanking interval, or otherwise encoded in the electronic signal in such a manner as not to interfere with the displayed image, is an information signal representing an electronic address of an online information provider. The online information provider may be any one of millions of interactive information providers which can be accessed through exchange of digital information signals, for example, a publisher who is available through the Internet for interactive transactions. As the media program is received for reproduction on a video display or audio sound system, the access system extracts the embedded electronic address for use in directly accessing the online information provider at the selection of the user.

Preferably, the address is stored at the time of extraction, for use in accessing the online information provider at the selection of the user. The duration for which an extracted signal address is stored may be relatively short, as in the case where the address is transmitted and refreshed continuously or at very short intervals, e.g., once per each frame of a video signal, or it may be longer, as when an address is transmitted only at selected intervals of a program.

Upon successfully extracting an electronic address, the access system provides an indicator signal to the user that more information is available. The indicator signal may take the form of a message displayed on a video screen, or other indicators such as a light, a sound or a wireless tactile indicator, e.g., vibrating wristband or clip-on unit. Additionally and/or alternatively, the video or audio program may contain a logo or message to be displayed for the user at points in the program which coincide with the presence of an embedded online information provider address, which, in such case, would eliminate the need for the access system to incorporate specific structures to provide indication to the user, in response to a successful extraction of an online information provider address.

After receiving the indicator signal, if the user desires more information, the user may request access to the online information provider through a command to the access system, e.g., through a pushbutton, user control keypad, voice command, mouse, touchpad, touchscreen, or other input device. Upon receiving such command, the access system automatically establishes a digital communications link with the online information provider through the transmission of a signal containing the extracted address. Preferably, upon establishment of such a communications link, the access system enables interactive communications with the online information provider.

In another embodiment of the invention, the extracted address may be used without first being stored, as in cases where a connection already exists between the access system and a network. Where such a connection exists, the access system provides an indicator signal to the user upon successful extraction of an online information provider address. However, in this embodiment, the access system waits to receive a user command to initiate access, and only after receiving such command does the access system extract the next received address from the electronic signal and use it to establish a direct connection to the online information provider.

In a preferred embodiment, after accessing an online information provider, the access system receives information from the online information provider and processes it for reproduction on a video or audio reproducing system. For example, the information may be displayed on the television screen in place of the television broadcast signal, on a separate computer monitor or other display device, or together with the television broadcast signal in a picture-in-picture format. In this way, the user can fully explore all of the related information available from the online information provider. Preferably, the access system is provided with hardware to reformat the received information signal for display upon an otherwise incompatible system, for example, to convert a digitally encoded video signal to an analog signal for reproduction on a conventional television set. Preferably, the access system is also provided with hardware for receiving and processing user commands for transmission to the online information provider for providing user communication transactions with the provider.

Further, since currently available audio and video broadcast technologies do not allow a person walking or driving a vehicle to learn of the nearest location of a desired facility to purchase advertised products/services, the present invention provides a system for interconnecting over the air analog or digital electronic signals with location data determined via any appropriate location determination system (for example, GPS or Loran). In conjunction with such a location determination system, a system of an embodiment of the invention suitably displays, by visual, audible or other means, the nearest and/or most convenient location of a business being advertised. Of course, additional content (i.e., not directions), related to the programming may also be displayed on a screen in a user's PDA or vehicle.

In one embodiment of such a system, an on-line address is incorporated in an electronic signal in a manner similar to that described with various other embodiments specified herein. The on-line address corresponds with the content of the electronic signal. The system also preferably advises the user that additional information is available through appropriate stimuli (for example, a visual, audible, and/or tactile indicator). Upon user direction, the system extracts the address from the electronic signal and combines the extracted address with the location information for the user (determined via a GPS or other receiver) into a signal which is transmitted to a suitable processor, server, or network of servers. The processing means receiving the combined signal then determines directions from the GPS determined position to the desired facility associated with the electronic signal and suitably transmits such directions back to the user for display.

In another embodiment, a system of the invention utilizes the on-line address to access data containing location and other information which is stored in a device local to the user (for example, a hard drive in an automobile). In this embodiment, the data is transmitted to the vehicle prior to the transmission of the electronic signal containing an address. The system receives the electronic signal and online address, retrieves the content identified at the online address from the storage device and utilizes the GPS data to determine directions. As such, in this embodiment, no transmission from a user to a central system or processor is necessary.

In still another embodiment, instead of the user's device receiving information from a central location and storing the information in a database, a prerecorded database is utilized. Such a database may be provided, for example, on a CD-ROM, DVD, memory stick, magnetic disc, or other magnetic and/or optical memory devices. The database preferably utilizes an indexing scheme which allows retrieval of information related to the online address embedded in the electronic signal. In this manner, mapping information, for example, can already be resident in the user device.

Thus, a system of the invention enables a user to retrieve an on-line address from a received electronic signal, determine the current location of the user, and provide directions from the user's current location to a facility related to the electronic signal.

Embodiments of the present invention will hereinafter be described, by way of example, with reference to the accompanying drawings, in which:
FIGURE 1 is a block and schematic diagram illustrating an online service access system in accordance with an embodiment of the invention;
FIGURE 2 is a block and schematic diagram of an access controller used in an online access system as shown in Figure 1;
FIGURE 3 is a block and schematic diagram of another embodiment of an access controller used in a system of the invention;
FIGURE 4 illustrates an embodiment of the invention in which directions relating to a program or advertisement on a car radio or a car television, are displayed to a user in a vehicle;
FIGURE 5 is a block diagram illustrating elements of one embodiment of the invention in which directions for a facility related to content provided in an electronic signal are obtained at a vehicle via a wireless communications link;
FIGURE 6 is a block diagram illustrating an access system utilized in a GPS embodiment of the invention;
FIGURE 7 is a block diagram illustrating an embodiment of the invention in which a user connects directly to the Internet;
FIGURE 8 shows a logic flow diagram of a direction determination system according to GPS embodiments of a system of the invention.

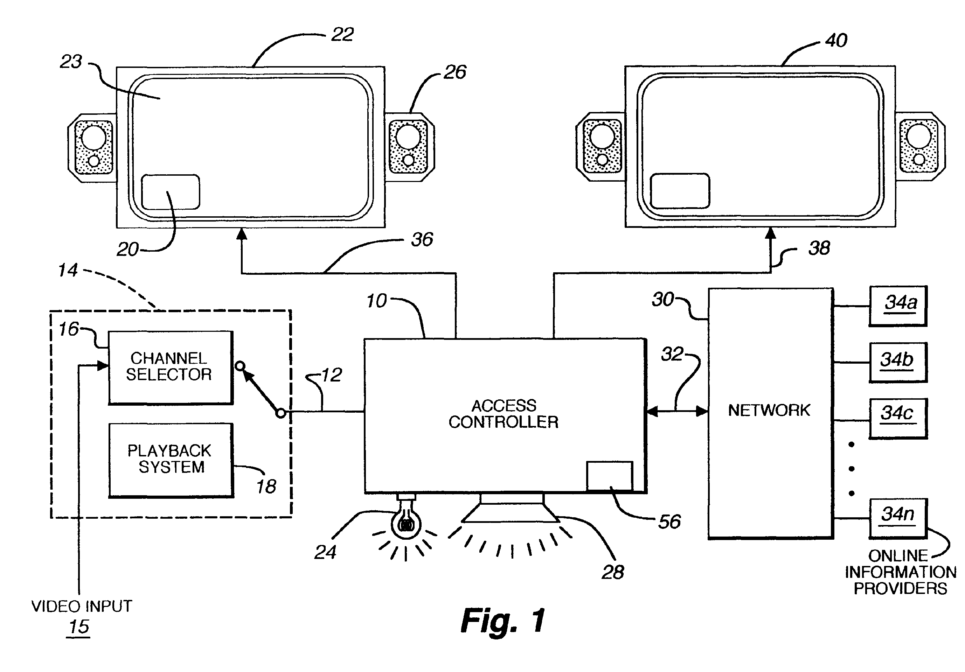

An online service access system according to an embodiment of the invention is illustrated in Figure 1. As can be seen in Figure 1, the online service access system comprises an access controller 10 which incorporates all of the components necessary to provide online access and to access received online information signals. The access controller 10 is arranged to receive an electronic signal 12 from a broadcast, cable or prerecorded medium program in conventional form from a video signal source 14. Video signal source 14 may be selectively switchable to provide output from a channel selector 16 connected to a cable or broadcast video input 15 or from a video playback system 18 which may be, for example, a videocassette recorder, an analog or digital videodisc device, and/or any other storage means for video programs. It will be appreciated that channel selector 16 may be provided in a unit separate from playback system 18, and/or within the access controller 10 itself. Additionally and/or alternatively, the access controller 10 may be arranged to receive and decode program signals at radio frequency as received from a broadcast or cable video source, or as downconverted to baseband by, for example, the front end receiving circuitry of a video cassette recorder or digital video disc device. It will also be appreciated that the function and results provided by the access controller 10 are not dependent upon which of many available playback systems is connected thereto, whether such systems are analog or digital in format, or whether such playback systems operate upon videotape, audiotape, or disc media.

The access controller 10 is connected via a primary output signal line 36 to a conventional reproducing system 22 such as a television set, and is optionally connected through a second output signal line 38 to a high resolution reproducing system 40, such as a computer monitor. In addition, the access controller 10 is connected to a public or private network 30 through an information signal carrier 32, e.g., telephone line, coaxial cable, fiber optic link, cellular, radiotelephone, or satellite link. Network 30 may be any private network (for example, America On Line ® or Excite@Home ® ), public network (for example, the Internet or World Wide Web), local area network or wide area network (for example, an office network or a company network), circuit-switched network, or any other configuration of devices which facilitate the exchange of electronic information. The network 30 is used to route address and information signals between the access controller 10 and a selected one of a plurality of online information providers 34a, 34b, 34c,...34n. Access controller 10 receives from the online information provider, through the network 30, information signals having a video or audio program content and selectively provides, through appropriate processing, a program signal which may be a currently conventional program signal, a high resolution signal or other program signal. The program signal provided may be reproduced upon an appropriate reproduction system, such as standard reproducing system 22, or high resolution reproducing system 40.

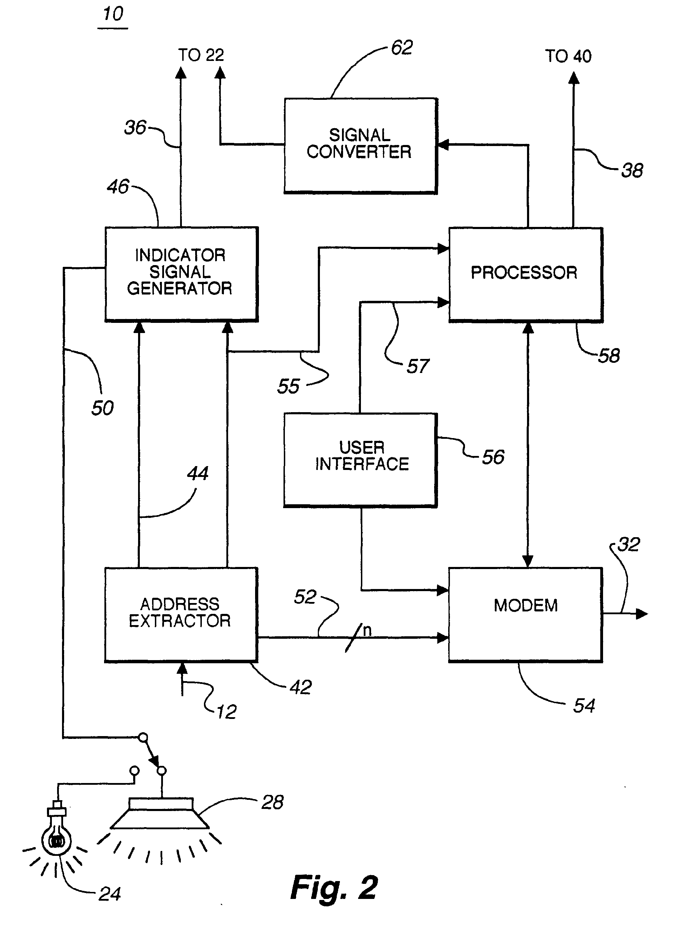

The configuration of an embodiment of the access controller 10 is described with reference to Figure 2. Access controller 10 is provided with an address extractor 42 which receives the electronic signal 12. Address extractor 42 incorporates hardware and/or software to appropriately detect, decode and store an address which has been embedded in a video or audio program signal. For example, an address signal may be transmitted in conjunction with an analog video signal, by transmitting a digital address during a vertical blanking interval or other portion of a conventional video signal in such a manner that displayed image quality of the video signal is not affected. For example, the address signal may be transmitted during a portion of a video signal such as in the vertical interval, in sync or through changes in the luminance or chroma signals. The address extractor 42 is arranged to detect the address signal and to electronically store, e.g., via a register or memory device (not shown), the detected address for use in accessing the online information provider at the selection of the user. The address signal may be transmitted at very short intervals, e.g., once for each frame of a video program such that storing and refreshing of the extracted address signal occurs at very short intervals. Alternatively, the address signal may be transmitted at longer intervals, i.e., at discrete intervals in a program such that the duration in which an extracted address signal is stored is much longer.

For cases in which a video or audio program is digitally encoded, the address extractor 42 may be configured in one of a number of known ways to detect an address signal which is received in conjunction with a digitally encoded video or audio electronic signal 12. The configuration of such known address extractors 42 is well known and is not described further herein.

The address extractor 42 has an output connection to an indicator signal generator 46. The indicator signal generator 46 provides a signal to a user that more information relating to a program is available, such information being accessible through an electronic address decoded by the address extractor 42 from the electronic signal 12. The indicator signal generator 46 may cause, for example, a video image 20 (e.g., picture within picture, logo, or icon) to be displayed with the video program signal on the reproducing system 22 or 40 to signal to the user that an address of an online information provider has been stored and that additional information is available. Additionally and/or alternatively the indicator signal generator 46 may signal to the user by activating a light 24 or other visual indicator located on an exterior panel of the access controller 10 or of the reproducing system 22 or 40.

Additionally and/or alternatively, the indicator signal generator 46 may cause a sound to be produced on a speaker 26 of the reproducing system 22 or 40, and/or by a speaker 28 provided in the access controller 10. In this respect, the design of the indicator signal generator 46 may be one already known in the art.

The access controller 10 is provided with a user input interface 56 for receiving user commands. These user commands may automatically initiate the establishment of a direct digital communications link to an online information provider through an address detected from the electronic signal 12 by address extractor 42. The user input interface 56 may enable interactive communication between the user and the online information provider. Any appropriate user input interface may be provided. For example, many conventional input interfaces are well suited for use as user interface 56 because of their compatibility with conventional television and audio sound systems. The user input interface may, for example, be an infrared, radio and audio frequency interface which decodes single key or multiple key sequences input from a wired or wireless remote user control.

Preferably, the user input interface 56 detects when a special purpose button on a remote user control has been pressed and provides a responsive signal which automatically causes the stored address of the online information provider to be retrieved and transmitted. User input interface 56 may also be arranged to detect when a special sequence of conventional keys has been pressed on a user control (e.g., a sequence such as "ENTER," "ENTER," "+VOLUME") and to enable interactive communication with the online information provider. Alternatively, user input interface 56 may be implemented by any appropriate microcomputer type user interface, e.g., mouse, touchpad, touchscreen, trackball, joystick, pushbutton, eraser head, or other such device. Preferably, the user interface 56 is arranged to provide and receive transmissions of digital information signals through a modem 54 to the online information provider, thereby enabling interactive user access with the online information provider for conducting detailed information searches, conducting transactions, and sending or posting messages to the accessed provider.

The modem 54 of the access controller 10 is arranged to transmit and receive digital information signals between the access controller 10 and the public switching network 30 through an information signal carrier line 32. Modem 54 demodulates incoming information signals and outputs them to a processor 58 which extracts a video and/or an audio signal 38. Preferably, the access controller 10 includes a signal converter 62 for adjusting or converting an incompatible signal for display upon conventional reproducing system 22, such as a television set, either in place of the television signal, superimposed over the television signal, or in picture-in-picture format, as controlled by the user. Alternatively, the processor 58 provides the video signal on line 38 to the high resolution reproducing system 40, such as a computer monitor. Indicator signal generator 46 may also incorporate a switch (not shown) which automatically switches off the primary output signal 36 whenever a signal appears at the output of signal converter 62. In this manner, information signals received from online information providers will be automatically displayed on conventional reproducing system 22 in place of the ordinarily displayed video signal 36.

The processor 58 may also receive the input video or audio electronic program signal through a line 55 output from the address extractor 42 (although direct connection to the electronic signal line 12 is possible). In this manner, the processor 58 may be arranged to operate upon the video or audio signal in conjunction with information signals received from an online information provider to generate a "picture within picture" signal for display upon the conventional reproducing system 22.

The operation of the system will now be described. An electronic signal 12, such as a signal from a video or audio program from channel selector 16 or playback system 18, e.g., prerecorded videotape, or an analog or digital video disc, containing an embedded signal representing the electronic address of an online information provider in the blanking interval or other non-displayed portion of the electronic signal 12 is received by address extractor 42. From the electronic signal 12, the address extractor 42 detects, decodes and stores any digital address of the online information provider embedded therein.

If an address is successfully decoded and stored, address extractor 42 activates, through signal line 44, indicator signal generator 46. The indicator signal generator 46 then produces an indicator signal and overlays or encodes it into a conventional program signal 36 to be displayed or transduced by conventional reproducing system 22. Alternatively, indicator signal generator 46 produces a signal on line 50 which activates a special purpose indicator, e.g., illuminating a light 24 or producing a sound on a speaker 28 of the access controller 10.

If the user wants to access the online information provider, the user gives such command to the access controller 10 by, for example, pushing a special button on the remote control device. The remote control device transmits a command signal to user interface 56 which receives the command signal. User interface 56, in turn, produces a signal which is applied to address extractor 42 to retrieve the stored address of the online information provider. Under appropriate software or hardware control, the address is transmitted via modem 54 over network 30 to an online information provider, e.g., 34c.

Once access to the online information provider has been established, the access controller 10 may automatically receive digital information signals through modem 54 from the online information provider. Received information signals are operated upon by processor 58 for displaying upon conventional TV reproducing system 22 or high resolution reproducing system 40, e.g., a computer monitor or other display device. Preferably, received signals which are incapable of being directly displayed upon conventional reproducing system 22, e.g., a conventional television set, are converted by a signal converter 62 for display thereon.

Information signals received from an online information provider may be displayed as still or moving images in place of the ordinarily displayed video signal on the conventional reproducing system 22, or may be displayed as part of a "picture within picture" display in conjunction with the ordinarily displayed video signal on conventional reproducing system 22 or on the computer monitor 40 or other display device.

After access has been established, user commands received through user interface 56 are transmitted as information signals through modem 54 to the online information provider, thereby providing interactive user access with the online information provider and enabling searching for detailed information, conducting transactions, sending or posting messages to the accessed provider and any other actions that can ordinarily be conducted through an online connection.

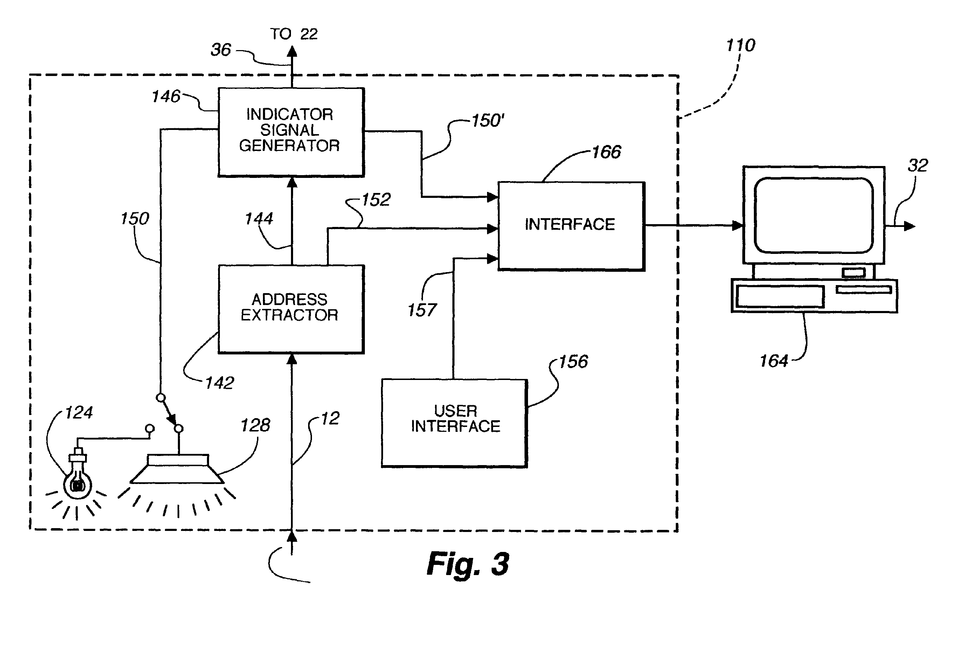

Another embodiment of the invention is illustrated in Figure 3 which illustrates a system operated in conjunction with a computer 164. In this embodiment, access controller 110 does not require an internal processor or modem because such functions are provided by the computer 164 connected thereto. In addition, the computer 164 also provides a monitor and audio reproducing components which function as the high resolution reproducing system 40. An address extractor 142, indicator signal generator 146, and user input interface 156 of access controller 110 are connected to the computer 164 by way of an output interface 166 such that decoded address outputs, indicator signals, and user commands, may be provided to the computer 164. The access controller 110 is arranged to receive an electronic signal 12 and to provide a conventional program signal 122 and a signal 150 to indicator 124 or indicator 128, in a similar manner to that described above for the self-contained embodiment of an access controller as illustrated in Figure 2. A computer supported embodiment of the invention as represented by the embodiment of Figure 3 is arranged to provide substantially the same function, and to operate in substantially the same manner as the self-contained embodiment represented in Figure 2.

In another embodiment of the invention, a connection to the network 30 may be maintained continuously by the access controller 10 through modem 54 or by way of the modem provided in the computer 164. This embodiment will be described with reference to the access controller 10 shown in Figure 2, although it will be appreciated that the arrangement of Figure 3 can also be used in the same way. In this embodiment, the address extractor 42 detects and decodes an online information provider address embedded in the video or audio program signal, but does not store the address.

As described above, the address extractor 42 provides a signal to the indicator signal generator 46 when it successfully detects an online information provider address in the electronic signal. The address extractor 42 detects and decodes the embedded address and passes it to the modem 54. The modem 54 only uses the extracted address if it has first received a user command to initiate access to the online information provider. It will be appreciated that this embodiment of the invention may be used with a video or an audio program signal wherein the online information provider address is frequently or continuously transmitted. Modem 54 is provided with hardware and/or software to automatically establish, upon receiving a user command to initiate online access, a direct digital communication link with the online information provider associated with the next received online information provider address.

As an example of the operation of this non-address storing embodiment of the invention, a video or an audio program signal having a frequently transmitted embedded signal containing an online information provider address is received through line 12 by address extractor 42. Address extractor 42 detects and decodes the online information provider address, but does not store it before passing it to modem 54. Modem 54 does nothing with the online information provider address unless a user command to initiate access has first been received from user interface 56. If such user command has been received, modem 54 transmits a signal over network 30 using the next received address to establish a digital communication link with the online information provider.

Automated direct user access to online information providers may be achieved without incorporating an indicator signal generator 46, 146 into the access controller 10. In this embodiment, the video or audio program as produced incorporates a visual or auditory indicator, such as a logo or message, which is automatically displayed or sounded by the conventional reproducing system 22 and/or by the high resolution reproducing system 40 during portions of the program when an online information provider address is present in the underlying electronic program signal. Through the visual or auditory indicator, the user is made aware of the availability of the online information provider address. Thus, the address extractor 42 may be arranged to detect and decode an embedded online information provider address only after receiving a user command to initiate access to the online information provider.

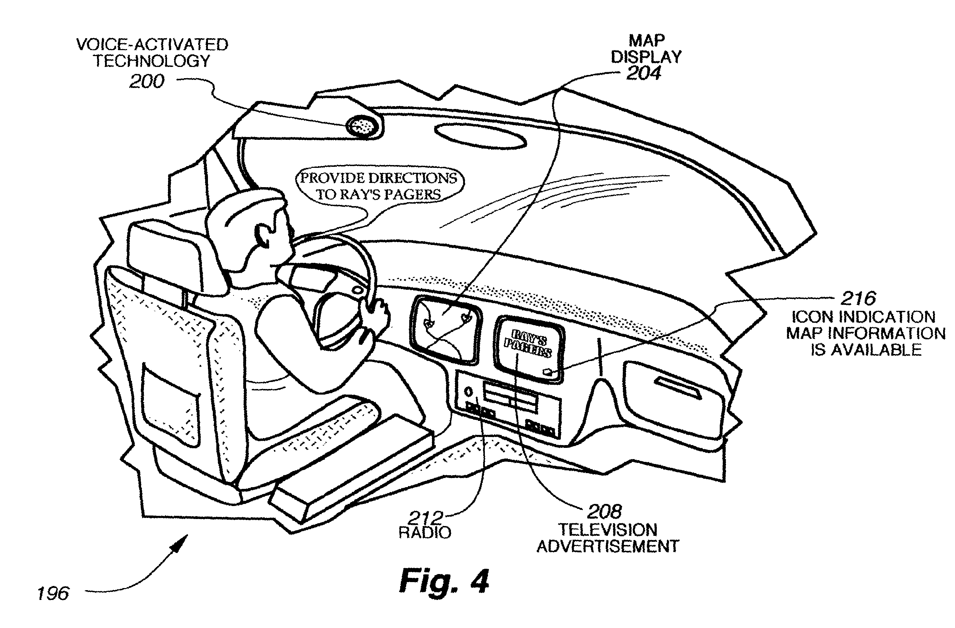

Figure 4 illustrates a general overview of a user environment in which direction information is displayed to a user in a vehicle 196. In this embodiment, the direction information is content related to an electronic signal, which may be received over a radio 212 or a television display 208.

As indicated in Figure 4, an advertisement may be received in the electronic signal 12 at the vehicle 196. The electronic signal 12, such as a signal from a video or audio program received over the air or played back from a playback system 18 (e.g., a prerecorded videotape, an analog or digital video disc, an optical or magnetic storage device, a hard disc drive, memory sticks, memory cards, or a write/rewritable CDROM or DVDROM) preferably contains an address representing the electronic address of an online information provider or a representation of such address.

As is commonly known, URLs are used to represent an address for an online information provider. The URLs within the electronic signal 12 may be used to represent an online information provider. However, the present invention is not limited to the use of URLs to represent an address, and any indicator, keyword, addressing scheme, mnemonic, or the like may be used to designate an address or a location where information related to a program may be found. For example, a mnemonic such as McDONALDS® may be used to locate an online address for information relating to all McDONALDS' restaurants, whereas McDONALDS234 might be used to address information relating to store number 234.

Additionally, the address may be embedded in the blanking interval, embedded in other non-displayed portions of the electronic signal 12 or may be received independently from the electronic signal by an alternative communications path. If embedded in the electronic signal 12, the address extractor 42 detects, decodes and stores a digital address of the online information provider. If an address is successfully decoded and stored, address extractor 42 activates an indicator signal generator 46. Indicator signal generator 46 then produces an indicator signal and preferably overlays or encodes it as an icon 216 onto a video signal to be displayed or transduced on the video display 208. Any of the alternative indicator signal means described above may also be employed in this embodiment.

If the user wants to obtain direction information to a facility associated with the advertisement, the user gives such command to access controller 10 by, for example, pushing a special button on the dashboard or preferably, providing a voice command to a voice activated system installed in the vehicle. Any voice recognition system may be used with the present system. The voice activated system transmits a command signal to user interface 56 which receives the command signal. User interface 56, in turn, produces a signal which is applied to address extractor 42 to retrieve the stored address of the online information provider. Further, the system determines the current position of the vehicle using a location determining system, for example, such as GPS.

In an alternative embodiment of the present invention, the access controller 10 is configured such that the address of the online information provider is automatically accessed without requiring the user to enter or give a command to a system. Thus, the system may be arranged such that whenever an address is provided with an electronic signal, the system automatically pushes information, including directions and/or location information, to the user.

Similarly, the system may be arranged to automatically provide directions and/or location information to a user based upon a user profile. The user profile may include any variable/parameter that indicates how, where, when, what, and in which format(s) a user desires to receive information associated with an address in an electronic signal. The user profile information may indicate, for example, that a user prefers to receive information only when the user's vehicle is not moving. Similarly, the profile may indicate that the user does not desire to receive information on certain restaurants or types of restaurants, or that the user only desires to receive information on locations within 2 miles of a current location or a home location, or based upon any other preference. The user profile may also take into consideration variables such as age, gender, income, type of vehicle driven, time of day, location of vehicle, and past responses to indicator signals.

Once the location data is determined, the location data and address are combined in a signal and transmitted over the air, for example, to a data processing center. Once access to the online information provider has been established, the vehicle can automatically receive digital information signals including address/map directions from the data processing center and online information provider. Received information signals are displayed on the map display device 204 or alternatively may replace the advertising program on the video display device 208.

Thus, information signals containing directions received from an online information provider may be displayed as still or moving images in place of the ordinarily displayed video signal on the video display device 208. These signals may also be displayed as part of a "picture within picture" display in conjunction with the ordinarily displayed video signal on conventional reproducing system 22 or on the computer monitor 40 or other display device set up in the vehicle (not shown in Figure 4).

In an alternative embodiment, instead of transmitting the location data and the address for the online information provider in a combined signal, a voice and/or data telecommunications link is established with an operator at the data processing center. In this embodiment, the user suitably communicates the address, their location (for example, by reading GPS location information from a display device), and any other pertinent information to an operator or customer service representative. The customer service representative then accesses the appropriate databases and provides the requested information to the user as a verbal communication, as an electronic signal, or as a combination thereof. In this manner, the system may be configured to support users of varying levels of technical sophistication, whilst providing customer support services as desired. It will be appreciated that various other permutations of data, address, location information and other communications between a data processing center (with or without an operator) and a user will be possible. Generally, the system communicates an address received in an electronic signal and location information for a user to a data processing center and receives destination and other information responsive to such communication.

After access has been established, user commands received through user interface 56 are transmitted as information signals through modem 54 to the online information provider, thereby providing interactive user access with the online information provider and enabling searching for additional detailed information, conducting transactions, sending or posting messages to the accessed provider and any other actions that can ordinarily be conducted through an online connection.

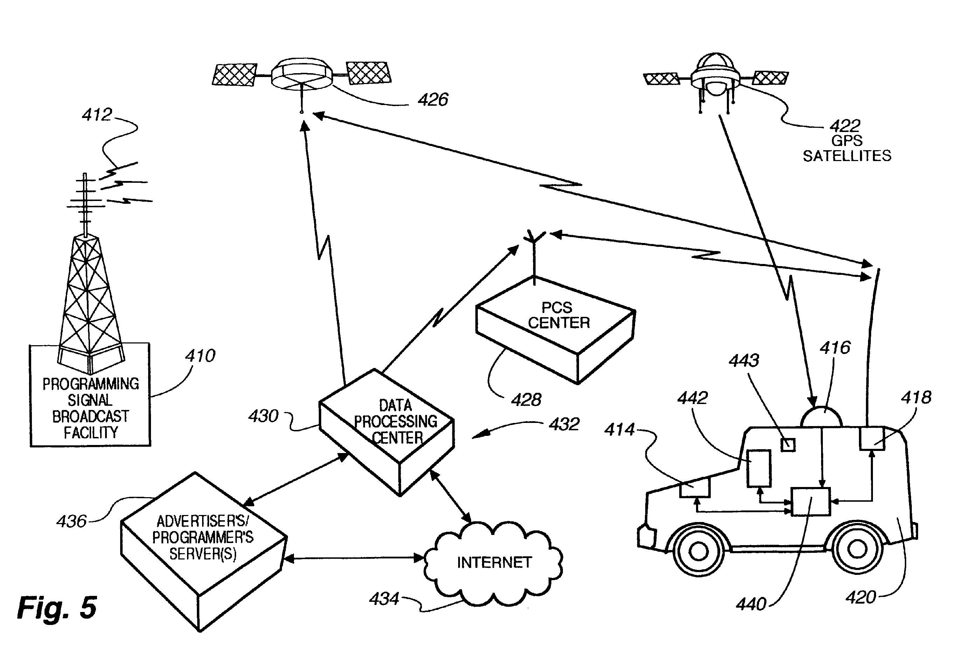

Figure 5 illustrates an embodiment of a system for providing the functions described above with reference to Figure 4. In the system shown in Figure 5, a GPS receiver 416 in conjunction with an access controller 400 is situated in a vehicle 420 to provide directions to a location. The location is associated with the content of an electronic signal. The location is identified through the online address. The vehicle 420 is provided with an access controller 440, an electronic signal receiver 414, the GPS signal receiver 416, a wireless communications system 418, and a user interface 442. Each of these units are in communication with the access controller 440.

The system shown in Figure 5 preferably uses GPS signals transmitted from GPS satellites 422 and from differential GPS centers 424 to determine the location of the vehicle. Various communication links may also be utilized including satellite communication links 426, cellular/digital/PCS networks 428, and any other communications links suitable to facilitate communications between the vehicle and a network 432. In the embodiment illustrated, a PCS digital network is utilized for accessing the data processing center 430. Such communications links are preferably established between a data processor/server 430 or via the Internet 434 with a server 436 specified by an online address embedded in the electronic signal. Of course, the online address may be received via any appropriate communications links separate from the electronic signal. For example, the address may be received via control channels in a PCS or cellular network.

Whilst this embodiment is illustrated by reference to a vehicle, it will be appreciated that the access controller 440, receivers 414, GPS system 416, user interface 442, display(s) and communication links 418 may be provided in alternative locations, for example, in a hand-held device and/or in a backpack unit. Further, the electronic signal 412 may be an audio, video or combined signal and is not limited to a radio broadcast signal.

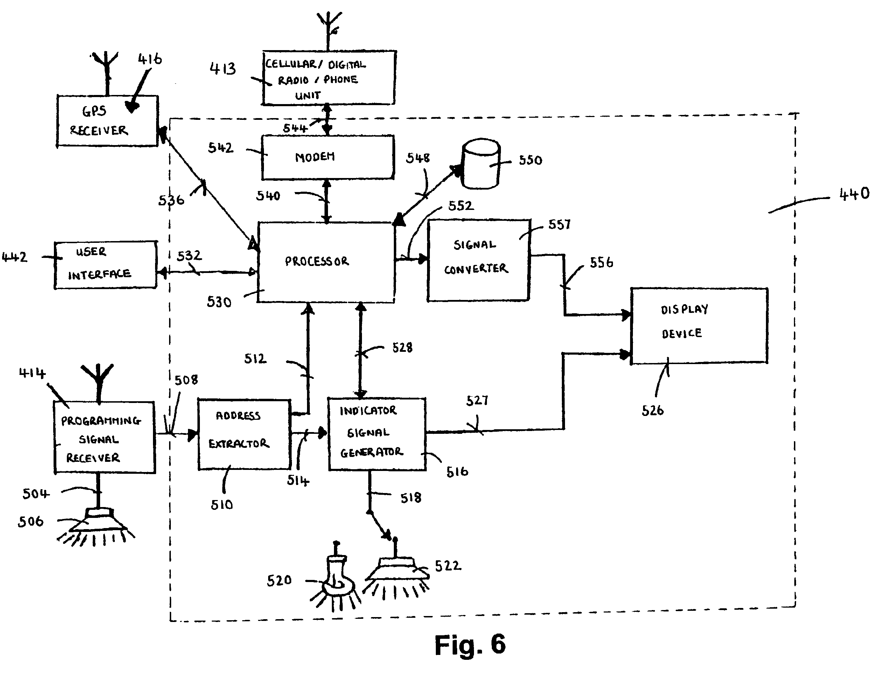

Figure 6 illustrates the access system 440 in more detail. As described above, the access system 400 is connected to an electronic signal receiver 414 which is connected via link 504 to a display unit 506 (in this case, a speaker system). The display unit 506 may be any unit capable of presenting an electronic signal and mapping or other direction information to a user including, but not limited to, speakers, headphones, video monitors (including, but not limited to, flat screen displays, Light Emitting Diode (LED) displays, conventional cathode ray tube displays and Heads Up Display (HUD) units (for example, a HUD unit installed on a dashboard such that information is presented on the windshield)). Further, the display unit may comprise multiple display monitors, for example, one for showing the electronic signal and one for presenting the map or other direction information. Alternatively, the mapping or other direction information may be shown in a picture-in-picture arrangement or side-by-side arrangement with the program carried in a video electronic signal.

The program receiver 414 is connected via link 508 to an address extractor 510. The address extractor receives the electronic signal from the receiver 414, detects an address embedded therein, extracts the address, decodes the address, and stores the address for later use by the processor 530. The address extractor 510 may utilize any suitable method for extracting an address from an electronic signal.

The address extractor 510 preferably has an output connection 514 with an indicator signal generator 516. The indicator signal generator 516 notifies the user that more information relating to the program is available and more specifically, that directions can be provided to a destination associated with or related to the program. The information and/or directions are preferably accessible from an electronic database after address extractor 510 has identified and decoded an address from the electronic signal. The indicator signal generator 516 causes, for example, a video image (e.g., picture within picture, logo, or icon) to be displayed on the user interface 442. In this embodiment, the indicator signal generator 526 also provides an output signal on link 524 to a display device 526, if desired. The display device 526 may be the same device as provided by the user interface 442 or a separate device. The design of indicator signal generator 516 may be of a design well known in the art.

For systems without video capabilities, the indicator signal may be an audible sound generated via a speaker 522 or it may consist of a steady or blinking light 520, a vibrating car seat (when the system is used in conjunction with a vehicle), or a vibrating device (similar to the vibrations provided by a pager). In short, any system and/or method capable of indicating to a user that additional information is available may be utilized. Whilst the indicator signal is a preferred element of the system, it can be omitted if preferred.

The access system 440 also has a link 512 from the address extractor 510 to a processor 530. The processor 530 may be any general purpose processor appropriately programmed and/or configured. The processor 530 is arranged to process the electronic signal, information signal, and indicator signal, as required. Further, the access system 440 is preferably arranged such that the processor 530 controls, manipulates, and/or performs the various features and functions of the access system 440 including extracting signals, determining positional data, and providing communications features.

As further shown in Figure 6, the processor 530 operates as a central hub for routing and controlling various signals. The processor 530 is connected to the user interface 442 by link 532, through which a user inputs selections. Upon selecting additional information (such as a map), the processor 530 establishes a communications link with an online information provider identified by the address embedded in or associated with the electronic signal 12.

It will be appreciated that the user interface 442 may be any suitable input interface. Preferably, the user interface 442 includes a speech recognition unit which allows a user to verbalize commands to the processor 530. In a vehicle, this enables a user to give commands without having to remove one or more hands from the steering wheel. However, any user interface may be utilized, including microcomputer interfaces such as a mouse, touch pad, touch screen, trackball, joystick, pushbutton, eraser head, and keyboard. The user interface is preferably positioned in a location convenient for a user. For example, a pushbutton may be positioned in a vehicle on a steering wheel, on a dashboard, in a center console, on the seat, etc.

Infrared, radio, and audio frequency interfaces which decode a single key or multiple key sequence input from a wired or wireless control panel may be utilized. In such an embodiment, the user interface 442 detects when a special purpose button on the interface 442 has been pressed and provides a responsive signal which automatically causes the processor 530 to obtain the address from the address extractor 510 and establish a communications link with an online information provider. The interface 442 may also be arranged to detect when a special sequence of keys has been pressed, such as, for example, a sequence such as "ENTER" "ENTER" "+VOLUME".

In order to facilitate accurate mapping, the access system 440 may communicate with a GPS receiver 416 of any GPS system. As shown, the processor 530 receives position signals from the GPS receiver 416 via a data link 536. The position signals may be generated by the GPS receiver 416 in formats suitable for immediate processing or they may be translated, as necessary, by the processor 530. The GPS receiver 416 preferably provides real-time position determinations for the access system 500.

In an embodiment, GPS systems are used to provide accurate positional information. Of course, other positional determination systems may alternatively be used, for example, including: Distance Measuring Equipment (DME) based on signal transmissions and radials including time changes, frequency changes, and other measurement techniques; Loran; triangulation of radio frequencies from known transmitter locations; intersections of two radio frequencies coupled with radials; and various methods for locating a 911 caller from a cellular phone. These various methods of determining the location of the vehicle may be accomplished within the vehicle (by performing the necessary calculations in the access controller or a similar component) or by establishing a communications link with a remote processing center which provides the current location of the vehicle. In addition, signals from multiple position/location determination systems may be combined in order to achieve a more precise location determination or for any other purpose.

The access system 440 is also provided with a modem 542 connected via a data link 540 with the processor 530. The modem 542 facilitates the transmission and receipt of digital signals between the processor 530 and the data processing center 430, preferably via a wireless telecommunications unit 418. The modem 542 converts the incoming digital signals into a format suitable for the processor 530 which then extracts a video and/or an audio signal (for example, a video representation of a map or audible directions). The access system 440 preferably includes a signal converter 554 for adjusting or converting an incompatible signal for display/presentation upon the display device 526. As mentioned previously, the display device 526 may be any device capable of communicating information to a user. Such a device could include a printer for printing maps or directions.

The access system 440 also includes a data storage device 500 for storing instructions and other information. The data storage device 550 may include Random Access Memory (RAM), Read Only Memory (ROM), permanent storage devices ( for example, CDs and DVDs), and temporary storage devices (such as hard-drives). Additionally and/or alternatively, circuits may be hard wired, internal registers may be provided, and/or off-site storage devices (for example, storage provided at the data processing center 430) may be used to provide data storage.

Connectivity between a user and the advertisers/programmers servers 436 (i.e., the information providers) may be established via the data processing center 430. In addition to features generally provided by a data processing center (for example, file backup and data routing), the center 430 may provide the data processing features necessary to determine from which online information provider content (for example, maps and directions) should be requested based upon the last reported location of the user. The center 430 may also establish communications links via the Internet 434 or other communications links 435 preferably with an Internet Service Provider (ISP) hosting a web site identified by the address transmitted in conjunction with the electronic signal 12. Commonly known Internet protocols may be utilized to connect with such ISPs. Additionally, the center 430 may be arranged to establish communications link via public and/or private networks and connections. In this respect, references to the Internet are to be interpreted to include any other suitable network and communications connectivity configurations including, but not limited to, private networks (for example, Intranets, AOL and OnStar ® ), and public networks.

The center 430 may also establish communications links with other databases, ISPs, and Application Software Providers providing application specific software packages, for example MAPQUEST or any other online information provider contacted via a public or private connection. The center 430 preferably receives data from the advertiser/programmer related to the selected address and data from the access system 400 (including position data), processes the data, provides a query to MAPQUEST or a similar direction determination program and obtains directions and/or maps to a specific location (for example, one of an advertiser's numerous facilities). These directions are translated by the center 430 into a format suitable for transmission back to the access system 440 which then provides such directions/maps to the user. Thus, in this embodiment, the center 430 performs the majority of the data interpreting, routing, querying, and processing features necessary to determine directions in response to an address provided with an electronic signal 12. The access controller 440 primarily functions as a conduit of information between the user and the center 430. It will be appreciated that data processing features described herein may be distributed between the access controller 440, the center 430, or the advertiser's/programmer's server 436, as required.

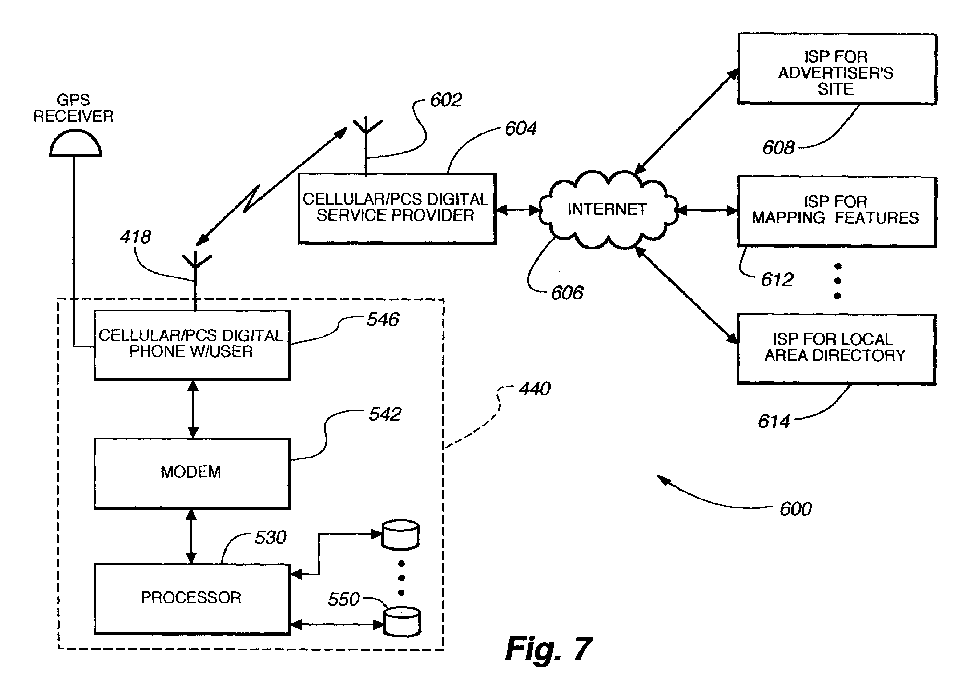

Figure 7 depicts another embodiment of a system of the invention. In this embodiment, the access system 440 performs many of the data manipulation and processing features performed by the center 430 in the previous embodiment. The access system 440 establishes a direct communications link through a wireless service provider 604 and the Internet 606 with an ISP 608 hosting an advertisers/programmers online information. As such, the access system 440 provides the data requesting, processing, storing and manipulation functions performed by the data processing center 430 in the previous embodiment. It will be appreciated that the processor 530 needed to provide the functions and features of the data processing center 430 may require greater operating speeds and performance characteristics than a processor which primarily acts as a conduit of information. Various processors currently exist which can provide the desired performance characteristics for the various embodiments. Of course, any suitable processor may be used by any system of this invention.

In an alternative embodiment, the access system 440 may periodically retrieve data from advertisers/programmers via the Internet. The data retrieved may preferably contain the content referenced by an address embedded within the electronic signal. The content is stored in a storage device 550 provided within the access system 440. The user system continues to receive an electronic signal 12 via any transmission means. Additionally, mapping software and other information/programs necessary to provide directions to a user are stored (or hard coded) in the access system 440. As such, when a user commands the access system 440 to generate maps and/or directions, in response to an address, the access system 440 does not have to establish communications links with external online information providers in order to process the user's request. Instead, the address is routed by the access controller 440, via the processor 530, to the appropriate data files in the storage device 550. The address may be translated by the processor 530, as necessary, and/or the file structures in the storage device 550 may be organized such that a single address format is compatible with any embodiment.

Instead of receiving an electronic signal 12, a system of the invention may be arranged to use a virtual radio/television station. Virtual stations are currently provided by online information providers such as AMERICA ON-LINE ® and YAHOO! ® . Additionally, virtual stations may be provided by combining high density storage devices such as TiVo with information downloads from an online information provider of a program, which is then presented to the user at the desired time. For example, a broadcast of a concert might be downloaded from an online information provider and stored on a TiVo, or similar, storage medium. The virtual program may include commercials, indicators and various other promotional devices which are designed to notify a user of goods/services for sale and when the user is in the proximity of a restaurant, a retail establishment, or a similar location being marketed based upon the current location of the user, as determined by GPS or a similar system.

In a further embodiment, the access system 440 further includes media playback devices such as Digital Versatile Disc (DVD) players and CD-ROM players. The selected address specifies content contained on the recorded media (DVDs/CD ROMs) which the processor 530 suitably identifies and retrieves. Communications links with ISPs or data processing centers may not be routinely established in this embodiment. Instead, the information required to provide directions in response to an address is provided in the DVDs, CDs, and other memory device utilized in communication with the access system 440. Further, the electronic signal itself may be prerecorded on, and thereby played back from, local storage.

In another embodiment, a user is provided with the opportunity to purchase goods/services indicated during an electronic signal by "clicking" or suitably directing the access controller 42 to transmit a purchase order to a location nearest to the user's current position, as determined by the GPS system. For example, when a user is presented with an advertisement for a special on a product at K-Mart ® , the user may transmit an order for such product by a simple "click" or push of a button on the user interface 56. The system utilizes the user's current location and the online information provider to determine the nearest K-Mart's location. The system then establishes a communications link with a system accepting orders for the designated K-Mart, orders the product being advertised, and provides directions from the user's current location to the designated K-Mart. Similarly, the address information for the vehicle 196 could also be utilized to identify local specials for establishments being marketed in the electronic signal 12. These local specials could be identified by establishing a communications link with an online information provider or by accessing a remote or local database.

Whilst embodiments of the present invention have been described to use various connectivity schemes with ISPs, data storage devices, and data processing centers, it will be appreciated that the present invention is not limited to any specific operating theory, system embodiment, hardware configuration, or communications network. Any system which provides for the combination of GPS or other position/location data with an address provided in conjunction with an electronic signal is within the scope of the invention. In addition, whilst a system of the invention may be arranged to receive and process streamed audio, video and other data, the invention may be used with streamed data and/or with non-streamed data, and is not limited to any specific signal format or transmission medium.

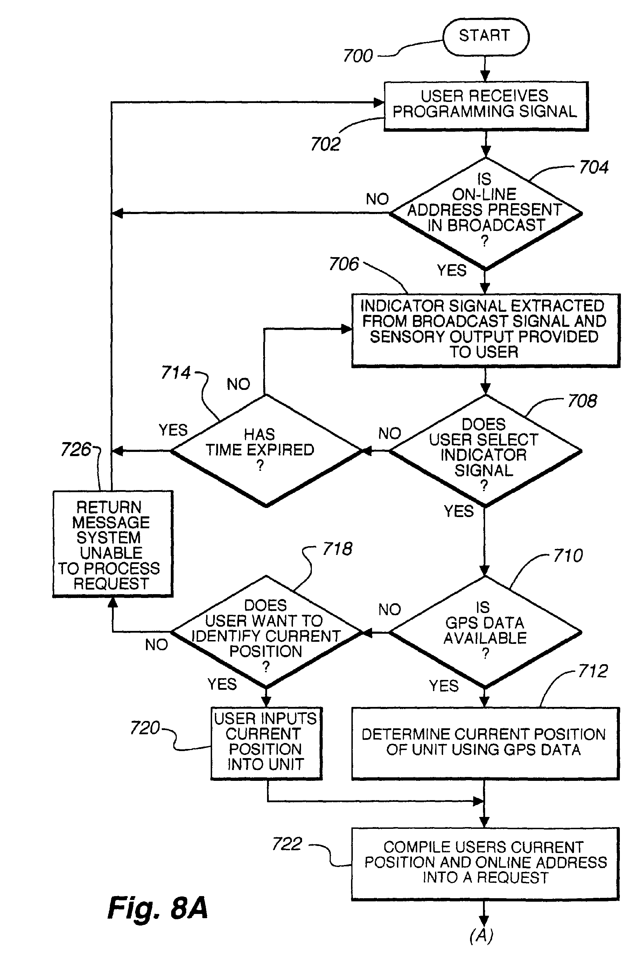

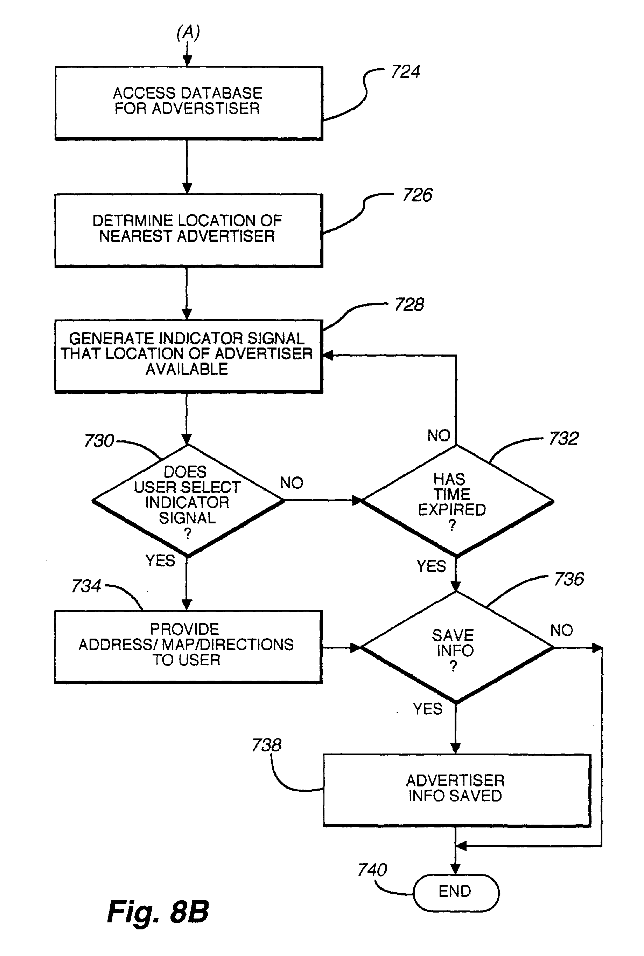

The operation of a system of the invention is now described with reference to the flow diagram of Figure 8. An electronic signal 412 preferably containing an embedded information signal is transmitted by a broadcaster 410, or received from a pre-recorded media (a DVD, digital tape, CD ROM, TiVo storage device, virtual radio/television station, or the like), whether local or remote from the user. An address, preferably representing the location of an online information provider, is embedded in, or transmitted separately from, the electronic signal. If the address is not embedded in the electronic signal, it may be sent in a data channel from the same transmission means of the electronic signal or may be received over an alternative transmission means, such as a PCS or cellular network. The address is preferably transmitted such that it is not displayed and does not interfere with the presentation of the program. The transmission is represented in Figure 8 by "START", Block 700. The user receives the electronic signal from either a remote or local source (Block 702). Reception of the electronic signal may be by any system capable of receiving and translating the electronic signal. For example, the system may include radios, specialized wireless devices with display capabilities, PDAs, televisions and computers. For the purposes of this explanation only, the electronic signal is exemplified as a radio broadcast signal (either analog or digital).

After receiving the electronic signal, the signal is provided to the address extractor which determines whether an address is present in the electronic signal, assuming that the address is embedded in the electronic signal (Block 704). When an address is present in the electronic signal 412, the address extractor 510 detects, decodes, and stores the address. The storage of the address may be accomplished in the storage device 550, in memory contained within the address extractor 510, or in any other storage device. If the address is received separately from the electronic signal, it is received by a conventional receiver module consistent with the particular transmission means or playback module utilized.

When an address is successfully detected, and decoded, and stored, if required, the address extractor 510 activates the indicator signal generator 516 (Block 706). The indicator signal generator 516 then produces an indicator signal. The indicator signal may be presented to the user via a separate signaling device (for example, a speaker 522 or light 520), may be overlaid with the presented program (for example, by providing an audible sound over the speaker system 506), or displayed on another display device 526 (for example, a HUD unit or a video monitor).

If the user wants to access an online information provider identified by the address, the user gives a command to the access controller 510, for example, by pushing a special button located on a dashboard, a steering wheel, or any other device/location (Block 708), or by issuing a predetermined voice command received by a voice recognition system. The access system 440 preferably provides a time window within which the user may select an indicator signal. This feature may be desirable in certain applications, such as, when driving a vehicle in heavy traffic. If the user does not push the button within a designated time or issue the appropriate voice command (Block 714), the access system deactivates the indicator signal and resumes normal operations (i.e., awaits the reception of the next information signal while presenting the electronic signal). Of course, and as described above, the indicator system may be omitted. In this case, it is presumed that online information is available for the program and the user may activate the online information via the user interface.

It is possible to arrange for the automatic pushing of information to users in response to an address being received in an electronic signal. In this case, an indicator signal may be generated (to notify the user of the available information), but no user response/command is required before the data is provided. It is also possible to arrange that only certain types of data are pushed to a user based upon the type of data, the user's desires, a user profile, or directions provided by a transmitter of the data. For example, by suitably designating an address within an electronic signal, such as an Emergency Broadcast Signal (EBS), the system may be arranged to automatically transmit the EBS to all users or to only those users within a certain area. Such a system would be highly beneficial, for example, in tornado prone areas to wam motorists of an approaching storm and directing them to the nearest shelter.

Referring back to Figure 8, when the user selects the indicator signal and thereby commands the access controller 440 to establish a communications link with the online information (or in the case of the stand alone unit, recall the information from a local data storage device), the system (via the processor 530) determines whether GPS or other positioning data is available, as discussed previously (Block 710). If GPS or other position data is not available, the access system 440 queries whether the user desires to identify their current location, if possible (Block 718). If the user does not or cannot identify their current location, the access system 440 sends an error message to the user and terminates the session.

When the user can identify their position, the user inputs such information into the system (Block 720). The user may input such information (in addition to providing any other inputs and/or commands to the system) by any manner possible including, but not limited to, key pad entries, voice entries, and touch screen entries. In a preferred embodiment, when GPS data is not available, the user may verbally enter an intersection (for example, N. Broadway and Colfax). However, other location designators such as DME, Loran, 911 cellular position determinations, street addresses, landmarks, zip codes, and map grid coordinates may be utilized.

If GPS data is available, the access system 440 obtains such position data from the GPS receiver 416 (Block 712). The GPS receiver 416 may preferably be set for varying levels of precision. As is known, determining a position solely based upon signals from GPS satellites is often only accurate to within a few meters. For most applications, this level of precision is more than adequate. However, when greater precision is required, differential GPS signals, and other compensation techniques, may be additionally used.

Upon receiving GPS position data, other position data, and/or user inputted position data, the access system 440 preferably compiles the position data and the address into a composite signal suitable for transmission to a data processing center (Block 722). This compilation is useful when the system is arranged to operate in conjunction with a data processing center. When the system is to independently determine directions, such a compilation may not be required. Instead, only the address may need to be communicated, if at all, via a web browser.

Continuing with the illustrated embodiment, the access system 440 will contact a data processing center 430, and the compiled signal is transmitted by the access system 440 to the data processing center 430 where the address of the online information provider is extracted from the compiled signal and a communications link (generally, via the Internet) is established with the online information provider 436 (Block 724). At this point, the data processing center 430 downloads a listing of locations identified by the online information provider as corresponding to the radio signal within which the address was embedded (i.e., the radio advertisement or program feature). This may be by streamed data and/or by non-streamed data. In certain situations, streamed data is desired, whereas in other situations non-streamed data is desired.

Using the files downloaded from the online information provider, the data processing center 430 determines the location of the nearest facility corresponding to the online information provider (Block 726). The data processing center determines the nearest location by comparing the advertiser's facilities with the user's last reported location. When the user is rapidly changing locations (for example, when traveling on a freeway), the access system 440 preferably periodically provides positional updates to the data processing center 430, as necessary. Alternatively, the system may be arranged to display directional information with each advertisement, such that a user may select an advertisement at any time for directions.

For example, while traveling in a vehicle, a user may receive a radio advertisement for McDonalds ® . The advertisement, an electronic signal, preferably includes an address which suitably identifies a location from which information pertaining to locations of McDonalds restaurants may be obtained. A system implementing the invention may be arranged to automatically push location information to a user upon the receipt of an address within the electronic signal. Additionally, the advertisement may include a phrase such as "there is a McDonalds located near you", and directions may be automatically generated in response to the phrase. Such directions might include a map or a verbal message such as, "proceed North for two blocks to the McDonalds located on your right".

Various techniques and methods may be used to determine the nearest location of a facility being advertised. Such techniques may include zip code comparisons, and latitude/longitude measurements and comparisons. The invention is not limited to any particular methodology or process for determining a user's location and/or the nearest location for a facility associated with an address present in the electronic signal.

Advertisements may be generated based upon the user's current location. In this case, the user's location may be provided to a data processing center which transmits advertisements for establishments within a given proximity of the user's current location. However, should the user not want a centralized processing center to know where the user is at any time, the advertisements might also be generated from a local database.

Once the nearest location has been determined, the data processing center 430 communicates such information back to the access system 440. Preferably, the data processing center 430 communicates sufficient information (including maps, locations and directions) such that the telecommunications link may be terminated and repeated telecommunications links need not be established, thereby minimizing power needs and "air-time" connection fees. Alternatively, the telecommunications links (including Internet links) may be continually established.

Once the access system 440 determines or receives from the data processing center 430 the location of the nearest advertiser's/programmer's facility, the system generates an indicator signal which notifies the user that location information is available (Block 728). The user may then select the indicator signal and thereby instruct the access system to provide the instructions, directions and maps. The user may be given the facility to select the format in which the information is to be presented (Block 730). If the user does not select the indicator signal within a prescribed time period (Block 732), the system may then either save the information or discard it (Block 736). The system may allow a user to save the information for later retrieval, which facility is particularly beneficial when the user is driving in heavy traffic.

When the user selects the indicator signal, the system provides the requested information in the format designated by the user (when multiple formats are possible) (Block 734). The system may then be arranged to provide point-to-point driving directions, for example, using a HUD unit or a video monitor to display arrows designating where to turn. Additionally and/or alternatively, the system may be arranged to provide verbal driving instructions, for example, "Turn Right at the Next Intersection". Any level of precision may be used for the navigation instructions. If required, the directions may be provided without the user having to respond to an indicator system, that is, the directions may be automatically provided to the user.

In certain applications, the user may desire to receive a listing of locations associated with the electronic signal. Instead of, or in addition to generating directions to a nearest location, the system may provide a listing of locations associated with the content of the electronic signal. Icons and various other indicators may be used to identify such locations on a display or a map. For example, in response to an address associated with a McDonalds advertisement, a map may be generated identifying each McDonalds restaurant within a given radius of the user's current location. The map might designate each restaurant location by superimposing McDonalds golden arches "M" with a nearest location designated in bold, a different color, a larger type size, or the like. When the user selects one these locations, directions from the user's current location to the selected location may be generated, and the selected location may also be designated by superimposing a circle, for example, around the selected location. Similarly, the user's current location and heading may be suitably displayed by a direction arrow. A user may be enabled to save such location designations and thereby continue on a pre-planned route while retaining the location information for future reference.

The system also provides the capability for saving locations and directions (Block 736). For example, the system may save the location of the user when the user selects the indicator signal which designates that directions are available. In this manner, the system may also provide instructions to the user to enable the user to return from where they originated, thereby ensuring the user does not get lost. By storing known locations, such as home, work, etc., in the data storage device, the system may also be arranged to direct a user back to a known location after visiting a facility designated by the information signal. Locations of facilities in response to information signals may be stored in the data storage provided whereby a database of locations which a user may access, as desired, may be generated.

To illustrate the operation of and embodiment of the invention in a real-world situation, assume the following scenario arises. Whilst traveling through a city, a radio advertisement containing an embedded address is presented for Kentucky Fried Chicken (KFC) ® . The user is interested in determining the location of the nearest KFC®. Instead of traveling aimlessly through the city looking for the nearest KFC or calling information on a wireless telephone, the user, upon receipt of an indicator signal, commands the access system 440 to extract the address, determine the location of the nearest KFC, and establish an online connection with KFC to place an order, whilst the access system 440 also provides directions to the restaurant. Thus, by combining GPS data with the convergence of online information providers and electronic signals, efficient contacting, transacting with, and finding of businesses promoting their goods/services via electronic signals is facilitated.

Embodiments of the invention have been described in the context of a system and method for providing directions to a driver of a vehicle in response to a radio broadcast. Of course, it will be appreciated that the present invention is not limited in application to a driving scenario only. By merely substituting the broadcast electronic signal 414 with any currently available audio/video playback systems (for example, a video cassette recorder, a compact disc player, or a digital versatile disc player), systems of the invention may be used in a wide variety of personal and vehicular related ways. For example, a tour route (either a walking tour or a riding tour) for a historic city (for example, London), may be provided on a compact disc. As the program is presented, addresses may be provided which direct the system to data files in a database(provided in the compact disc player) which indicate where the various tour stops are located, including historic sites and restaurants. Such directions may be provided in any language. These data files, in conjunction with GPS or similar navigation data, may be used to guide a user to specific locations.

Similarly, a system of the invention may be used in museums to provide directions to various areas of a museum. For example, during a visit to the Louvre museum in Paris, France, a user may wish to see specific works of art and to bypass others. The user may want to see additional works by Monet while in a gallery showing works by Picasso. Using a system of the invention, a museum may devise programs which provide information on specific works as well as providing addresses to data files containing the location of such works. The user may select art works to be viewed from a program which contains addresses for their location within the museum, whereby efficient viewing for users may be facilitated. Additionally, when works of art are relocated or taken off display, it is only necessary to update a single data file specifying, where that work of art is (or is not) located, instead of revising an entire program.

In applications such as museums, where greater precision may be required, navigation systems other than GPS may be used, and/or GPS systems may be supplemented, as desired, to direct the user through the various areas of the museum. The user may input in what gallery he or she is currently located. Such a system may also provide directions to resting areas, restrooms, water faucets, coat checks, and other areas of a facility which a visitor may wish to locate.

It will be appreciated that variations in, and modifications to, the embodiments described and illustrated may be made within the scope of the invention as defined by the accompanying claims.

## Claims

**1.** A system for providing a user access to additional information from an information source related to a program provided in an electronic signal, the system comprising:
at least one receiver for receiving said electronic signal and an address;
means, coupled to the receiver, for decoding said address;
user interface means for receiving user commands to access said additional information;
means for establishing a link, upon receipt of user commands, with an information source associated with said address; and
direction determination means for determining directions to one or more destinations, identified by said information source.

**2.** A system as claimed in claim 1, wherein said electronic signal is a radio broadcast signal.

**3.** A system as claimed in claim 1, wherein said electronic signal is a television broadcast signal.

**4.** A system as claimed in claim 1, wherein said electronic signal comprises at least one of an audio signal, a video signal, and a combined audio and video signal.

**5.** A system as claimed in any preceding claim, wherein said electronic signal is received from a storage device.

**6.** A system as claimed in claim 5, wherein said storage device is a digital versatile disk on which said electronic signal is stored.

**7.** A system as claimed in claim 5, wherein said storage device is a compact disc on which said electronic signal is stored.

**8.** A system as claimed in claim 5, wherein said storage device is a video-cassette for playing in a video-cassette player, and said electronic signal is stored on said video cassette.

**9.** A system as claimed in claim 5, wherein said storage device is a magnetic tape on which said electronic signal is stored.

**10.** A system as claimed in claim 5, wherein said storage device is the hard disc incorporated in a hard disc drive, and the electronic signal is stored on the hard disc.

**11.** A system as claimed in claim 5, wherein said storage device is an optical storage device on which said electronic signal is stored.

**12.** A system as claimed in claim 5, wherein said storage device is a magnetic storage device on which said electronic signal is stored.

**13.** A system as claimed in claim 5, wherein said storage device is a Memory Stick™ on which said electronic signal is stored.

**14.** A system as claimed in claim 5, wherein said storage device is a memory card on which said electronic signal is stored.

**15.** A system as claimed in claim 5, wherein said storage device is a write/rewritable CDROM on which said electronic signal is stored.

**16.** A system as claimed in claim 5, wherein said storage device is a write/rewritable DVD ROM on which said electronic signal is stored.

**17.** A system as claimed in any of claims 1 to 4, wherein said electronic signal is received from a satellite broadcast.

**18.** A system as claimed in any of claims 1 to 4, wherein said electronic signal is received from cable.

**19.** A system as claimed in any of claims 1 to 4, wherein said electronic signal is received over the Internet.

**20.** A system as claimed in any of claims 1 to 4, wherein said electronic signal is received over a public network.

**21.** A system as claimed in any of claims 1 to 4, wherein said electronic signal is received over a private network.

**22.** A system as claimed in any of claims 1 to 4, wherein said electronic signal is received over a wireless telecommunications link.

**23.** A system as claimed in any of claims 1 to 4, wherein said programming is provided via a wireless network.

**24.** A system as claimed in claim 22 or claim 23, wherein said wireless telecommunications link is encrypted.

**25.** A system as claimed in any preceding claim, wherein said electronic signal is encrypted.

**26.** A system as claimed in any preceding claim, further comprising at least one speaker for presenting audio from said electronic signal.

**27.** A system as claimed in any preceding claim, further comprising a video monitor for displaying video from said electronic signal.

**28.** A system as claimed in any preceding claim, wherein said address is embedded in said electronic signal.

**29.** A system as claimed in any of Claims 1 to 27, wherein said address is transmitted separately to said electronic signal.

**30.** A system as claimed in any preceding claim, wherein said address is associated with a network selected from: the Internet, an Intranet, a private network, and/or a point-to-point network.

**31.** A system as claimed in any preceding claim, wherein said address is associated with an online information provider.

**32.** A system as claimed in any preceding claim, wherein said address contains an Intranet address.

**33.** A system as claimed in any preceding claim, wherein said address contains an Internet address.

**34.** A system as claimed in claim 33, wherein said Internet address is received from an Internet connection.

**35.** A system as claimed in any preceding claim, wherein said address is a database file designator.

**36.** A system as claimed in any preceding claim, further comprising an address extractor, in communication with the receiver, and arranged to extract any said address embedded in said electronic signal.

**37.** A system as claimed in any preceding claim, further comprising an indicator signal generator arranged, upon receipt of said address, to generate an indicator signal.

**38.** A system as claimed in claim 37, wherein said indicator signal comprises at least one of: an audio signal, a video signal, and/or a tactile indicator.

**39.** A system as claimed in claim 37 or claim 38, wherein said indicator signal is presented via the same device as said electronic signal.

**40.** A system as claimed in any preceding claim, further comprising location determination means for determining a current location of said receiver, and wherein said direction determination means uses said current location to determine said directions.

**41.** A system as claimed in claim 40, wherein said receiver further comprises a device compatible with a navigation system selected: Distance Measuring Equipment which utilize transmissions and radials including time changes and frequency changes to determine locations, Loran, radio frequency triangulation, intersection of radio signals with radials, and 911 based location identification systems.

**42.** A system as claimed in claim 40, wherein said location determination means further comprises:
a GPS receiver which receives GPS satellite signals and determines said current location.

**43.** A system as claimed in claim 42, wherein said location determination means further comprises a differential GPS receiver which receives GPS error correction signals and determines the current location of said receiver based upon said GPS satellite signals and said GPS error correction signals.

**44.** A system as claimed in any one of claims 40 to 43, wherein said location determination means uses location entries by a user of said system in determining said current location.

**45.** A system as claimed in claim 44, wherein said location entries comprise a street address.

**46.** A system as claimed in claim 44, wherein said location entries comprise an identification of an intersection.

**47.** A system as claimed in claim 44, wherein said location entries comprise the identification of a landmark.

**48.** A system as claimed in claim 44, wherein said location entries comprise latitude and longitude designations.

**49.** A system as claimed in any of claims 40 to 48, wherein said location determination means is arranged to calculate a current location of said receiver based upon measurements comprising at least one of: time, distance, and direction from a known location.

**50.** A system as claimed in any preceding claim, wherein said user interface further comprises a HUD unit.

**51.** A system as claimed in any preceding claim, wherein said user interface is responsive to voice commands.

**52.** A system as claimed in any preceding claim, wherein said user interface comprises a keypad for providing commands to said system.

**53.** A system as claimed in any preceding claim, wherein said user interface is a video monitor.

**54.** A system as claimed in claim 53, wherein said video monitor comprises a flat screen display.

**55.** A system as claimed in claim 53, wherein said video monitor comprises a television.

**56.** A system as claimed in any preceding claim, wherein said user interface comprises a speaker.

**57.** A system as claimed in any preceding claim, wherein said user interface comprises a computing device.

**58.** A system as claimed in and preceding claim, wherein said user interface comprises a printer.

**59.** A system as claimed in any preceding claim, wherein said user interface provides said directions to said user.

**60.** A system as claimed in claim 59, wherein said directions comprise a map designating a route between the current location and the destination.

**61.** A system as claimed in any preceding claim, wherein said direction determination means is co-located with said receiver.

**62.** A system as claimed in any of claims 1 to 60, wherein said direction determination means is remotely located from said receiver.

**63.** A system as claimed in claim 62, wherein said direction determination means is located in a data processing centre.

**64.** A system as claimed in claim 63, further comprises:
a processor co-located with said receiver; and
a communications link between said processor and said direction determination means;
wherein said processor receives said address and a current location, compiles said address and said current location into an output message, and transmits said output message to said direction determination means via said communications link.

**65.** A system as claimed in claim 64, wherein said direction determination means extracts said address and said current location from said output message, accesses a data file designated by said address, selects from said data file a destination based upon the current location, determines directions between said current location and said destination, and transmits said directions to said processor via said communications link.

**66.** A system as claimed in claim 65, wherein said data file is an Internet site hosted by an Internet Service Provider and said address contains an address for said Internet site.

**67.** A system as claimed in claim 66, wherein said data processing centre establishes an Internet connection with said Internet site and accesses said data file via a private network.

**68.** A system as claimed in claim 66, wherein said data processing centre establishes an Internet connection with said Internet site and accesses said data via a public network.

**69.** A system as claimed in claim 66, wherein said data processing centre establishes an Internet connection with said Internet site and accesses said data file via said Internet site.

**70.** A system as claimed in any of claims 66 to 69, wherein said data processing centre obtains maps from an Internet site, and wherein said directions are provided as one or more maps.

**71.** A system as claimed in any of claims 63 to 67, wherein said communications link is a wireless communications link.

**72.** A system as claimed in any of claims 64 to 71, wherein said communications link is a satellite link.

**73.** A system as claimed in any of claims 64 to 71, wherein said communications link includes a television broadcast link.

**74.** A system as claimed in any of claims 64 to 71, wherein said communications link includes a radio broadcast link.

**75.** A system as claimed in any of claims 64 to 71, wherein said communications link includes a cellular telecommunications link.

**76.** A system as claimed in any preceding claim, further comprising a communications device in communication with said direction determination means.

**77.** A system as claimed in claim 76, wherein said address contains an address for an Internet site, and said direction determination means further comprises a web browser which accesses said address and establishes a communications link with an internet site designated by said address.

**78.** A system as claimed in claim 77, wherein said Internet site further contains at least one web page at which a data file is located.

**79.** A system as claimed in claim 78, wherein said data file contains a listing of at least one location of said destination.

**80.** A system as claimed in claim 79, wherein said direction determination means analyzes said data file, determines which of the various locations of the destination are within a geographic region where said user is located and provides a listing of locations of the destinations within said geographical region.

**81.** A system as claimed in claim 79, wherein said direction determination means analyzes said data file, determines which of the various locations of the destination is nearest to the current location, and selects a location nearest to the current location as said destination.

**82.** A system as claimed in claim 81, wherein said location nearest to the current location is determined based upon commuting distance.

**83.** A system as claimed in claim 81, wherein said location nearest to the current location is determined based upon commuting time.

**84.** A system of as claimed in any one of claims 77 to 83, wherein said direction determination means analyzes the data file, calculates an estimated time of travel from the current location to each of the locations in the data file, and selects as the destination the location with the shortest estimated time of travel.

**85.** A system as claimed in any preceding claim, further comprising a data storage device in communication with said direction determination means, said data storage device containing at least one data file and identifying the/or each said data file by an address.

**86.** A system as claimed in claim 85, wherein said data file comprises a look-up table.

**87.** A system as claimed in claim 85, wherein said address identifies a location of said data file in said data storage device.

**88.** A system as claimed in claim 85, wherein said data storage device contains direction finding software for determining directions between two locations.

**89.** A system as claimed in claim 88, wherein said direction determination means utilizes the direction finding software in generating directions from the current location to said destination.

**90.** A system as claimed in claim 88, wherein said direction finding software further comprises mapping software.

**91.** A system as claimed in any preceding claim, further comprising a communications link between said direction determination means and a remote database containing data files, wherein said direction determination means copies data files from said remote database into a data storage device of said system.

**92.** A system as claimed in claim 91, wherein the copying of said data files is accomplished upon user direction.

**93.** A system as claimed in claim 91, wherein the copying of said data files is accomplished automatically.

**94.** A system as claimed in any preceding claim, wherein said electronic signal is in a digital format.

**95.** A system as claimed in any of claims 1 to 93, wherein said electronic signal is in an analog format.

**96.** A system as claimed in any preceding claim, further comprising a display monitor for displaying a video signal contained in said electronic signal, wherein said directions are displayed on said display monitor in a picture-in-picture or side-by-side arrangement with the video signal.

**97.** A system as claimed in any preceding claim, further comprising a display monitor in communication with said direction determination means and wherein said directions are displayed on said display monitor.

**98.** A system as claimed in claim 97, wherein said directions are provided in a progressive manner.

**99.** A system as claimed in any preceding claim, wherein the directions are provided in a form comprising at least one of: text, an audio signal, a video signal, graphics, and multimedia signal.

**100.** A system as claimed in any preceding claim, wherein said additional information comprises directions to a store location.

**101.** A system as claimed in any preceding claim, wherein said additional information comprises details as to the location of an advertiser presented in said program.

**102.** A system as claimed in any preceding claim, wherein said additional information comprises a map illustrating said directions.

**103.** A system as claimed in any preceding claim, wherein said information further comprises online content obtained from an online information provider.

**104.** A system as claimed in claim 103, wherein said online content further comprises information about an advertisement presented in said program.

**105.** A system as claimed in any preceding claim, wherein said electronic signal is received via a personal data assistant.

**106.** A system as claimed in any of claims 1 to 104, wherein said electronic signal is received via a cellular telephone.

**107.** A system as claimed in claim 105, wherein said personal data assistant comprises at least one device selected from: a display screen, a speaker, and a headset on which said electronic signal is presented to a user.

**108.** A system as claimed in Claim 106, wherein said cellular telephone comprises at least one device selected from: a display screen, a speaker, and a headset on which said electronic signal is presented to a user.

**109.** A system as claimed in any preceding claim, further comprising at least one headset for presenting an audio program contained in said electronic signal.

**110.** A system as claimed in any preceding claim, further comprising a video monitor for displaying video from said electronic signal, the video monitor being provided on a personal data assistant.

**111.** A system as claimed in any of claims 1 to 109, further comprising a video monitor for displaying video from said electronic signal, the video monitor being provided on a wireless telecommunications device.

**112.** A system as claimed in any preceding claim, wherein said user interface comprises a button provided on a steering wheel of a vehicle, selection of said button causing said system to retrieve said additional information.

**113.** A system as claimed in any of claims 1 to 111, wherein said interface comprises a button provided on a dashboard of a vehicle, selection of said button causing said system to retrieve said additional information.

**114.** A system as claimed in any of claims 1 to 111, wherein said user interface comprises manually actuable means provided in a vehicle to be accessible from a driver's position, actuation of said manually actuable means causing the system to retrieve said additional information.

**115.** A system as claimed in any preceding claim, wherein said additional information is automatically provided to a user upon receipt of said address by said receiver.

**116.** A system as claimed in any preceding claim, wherein said additional information is automatically provided to a user when a profile for the user indicates that the user should receive said additional information.

**117.** A system as claimed in claim 116, wherein the user profile is established at said information source.

**118.** A system as claimed in claim 116, wherein said user profile is stored in a storage device local to said receiver.

**119.** A system as claimed in any of claims 116 to 118, wherein said profile indicates a user should receive said additional information based upon as least one parameter selected from: when said address is received, the content of said additional information associated with said address, whether the user is in transit, whether the user is stationary, whether the user is using a wireless telecommunications device to complete a telephone call, the time of day, and the location of the user.

**120.** A system as claimed in any preceding claim, wherein said additional information further comprises directions generated in response to a current location of the user and the nearest location of a facility associated with said address.

**121.** A system as claimed in claim 120, wherein the directions are verbal directions.

**122.** A system as claimed in claim 121, wherein said verbal directions are communicated to the user in synch with a message provided in said electronic signal.

**123.** A system as claimed in claim 120, wherein said directions are visual directions.

**124.** A system as claimed in claim 123, wherein said directions direct a user from a current location to a destination.

**125.** A method for providing a user access to additional information from an information source, related to a program provided in a electronic signal, said method comprising the steps of:
receiving a program and an address;
determining a current location of the user;
identifying a destination associated with said address;
generating directions from said current location to said destination; and
providing said directions to the user.

**126.** A method as claimed in claim 125, wherein said address is embedded in said electronic signal and said method further comprises the step of extracting said address from said electronic signal.

**127.** A method as claimed in claim 125, wherein said address is received independently from said electronic signal.

**128.** A method as claimed in any of claims 125 to 127, wherein said electronic signal is a radio broadcast signal.

**129.** A method as claimed in any of claims 125 to 127, wherein said electronic signal is a television broadcast signal.

**130.** A method as claimed in any of claims 125 to 127, wherein said electronic signal comprises at least one of: an audio signal, a video signal, and a combined audio and video signal.

**131.** A method as claimed in any of claims 125 to 130, wherein said electronic signal is a satellite signal.

**132.** A method as claimed in any of claims 125 to 131, wherein said address comprises an address associated with a network selected from: an Intranet, a private network, and a point-to-point connection.

**133.** A method as claimed in any of claims 125 to 132, wherein said electronic signal is a previously recorded signal.

**134.** A method as claimed in claims 125 to 131, wherein said address comprises an Internet address.

**135.** A method as claimed in claim 134, wherein said Internet address is accessed via a private data service.

**136.** A method as claimed in claim 134, wherein said Internet address is associated with a data file comprising at least one location for said destination.

**137.** A method as claimed in claim 136, wherein said Internet address is accessed via an Internet portal and said data file is a web page hosted by an Internet service provider at said Internet address.

**138.** A method as claimed in any of claims 125 to 137, wherein said electronic signal is received as a streamed signal.

**139.** A method as claimed in any of claims 125 to 137, wherein said electronic signal is received as a non-streamed signal.

**140.** A method as claimed in claim 138, wherein said steamed signal is at least one selected from an audio streamed signal, a video streamed signal, and a combined audio-video streamed signal.

**141.** A method as claimed in claim 138 or claim 140, wherein said streamed signal is transmitted via at leat one of: radio, television, wireless, satellite, and cellular telephone.

**142.** A method as claimed in any of claims 125 to 141, wherein the step of determining a current location of the user comprises the steps of determining a current location of the user based upon positional measurements using at least one navigation system selected from: global Positioning System signals, distance measuring equipment, time and frequency based changes in signals, Loran, radio frequency triangulation, intersection of radio signals with radials, and 911 based location identification systems.

**143.** A method as claimed in any of claims 125 to 141, wherein the step of determining a current location of the user comprises the steps of:
receiving Global Positioning Satellite (GPS) signals; and
determining said current location of the user based upon said GPS signals.

**144.** A method as claimed in claim 143, wherein the step of determining a current location of said user based upon said GPS signals further comprises the steps of:
receiving a differential GPS signal; and
utilizing said differential GPS signal in conjunction with said GPS signal to determine said current location of the user.

**145.** A method as claimed in any of claims 125 to 144, wherein said step of identifying a destination associated with said address comprises the steps of:
obtaining a listing of at least one location of said destination;
comparing said listing of at least one location of said destination against the current location; and
identifying from said listing a destination closest to said current location.

**146.** A method as claimed in claim 145, wherein the identifying step further comprises identifying a destination closest in distance to said current location.

**147.** A method as claimed in claim 145, wherein the identifying step further comprises identifying a destination closest in time to said current location.

**148.** A method as claimed in any of claims 145 to 147, wherein said method further comprises the steps of:
pre-identifying areas within which locations are to be excluded from consideration;
eliminating from said listing of destinations those locations within areas pre-identified;
comparing those locations remaining in said listing after said step of eliminating has been accomplished against said current location; and
identifying from said locations remaining a destination closest to said current location.

**149.** A method as claimed in any of claims 125 to 148, wherein said method of generating directions further comprises the step of generating a map showing a recommended route from said current location to said destination.

**150.** A method as claimed in any of claims 125 to 149, wherein said steps of identifying a destination and generating directions further comprises the steps of:
transmitting said address and said current location to a data processing centre;
accessing via a communications link between said data processing centre and an online information provider a data file containing a listing of locations of said destination, said data file being identified by said address;
comparing said listing of said locations of said destination with said current location to determine a destination closest to said current location;
providing the location of said destination identified as closest and said current location to a mapping program, said mapping program determining directions from said closest destination to said current location; and
providing said directions determined by said mapping program to said user.

**151.** A method as claimed in claim 150, wherein said map is a video representation of said map and said method further comprises the step of displaying said directions on a video display device.

**152.** A method as claimed in claim 150, wherein said directions are printed in the form of a map.

**153.** A method as claimed in claim 150, wherein said directions are presented on a HUD unit.

**154.** A method as claimed in claim 150, wherein said step of providing directions to said user is accomplished via a speaker system presenting oral directions.

**155.** A method as claimed in claim 150, wherein said step of providing directions to said user is accomplished via headphones presenting oral directions.

**156.** A method as claimed in claim 150, wherein said step of providing directions to said user is accomplished via directional arrows signaling said user to change direction at a specific location.

**157.** A method as claimed in claim 156, wherein said specific location is a street intersection.

**158.** A method as claimed in claim 156, wherein said specific location is a gallery in a museum.

**159.** A method as claimed in claim 156, wherein said specific location is a landmark.

**160.** A method as claimed in claim 150, wherein said step of providing directions to said user is accomplished via a video monitor.

**161.** A method as claimed in claim 150, wherein after the steps of providing directions to the user, the method further comprises the steps of:
monitoring the location of the user as the user travels from the current location to said destination;
generating an indicator signal when the user deviates from said directions;
generating a second set of directions from said user's new location to said destination and
providing said directions to the user.

**162.** A method as claimed in claim 150, further comprising the steps of generating directions from said destination to said current location such that said user upon arriving at said destination is provided directions indicating how to return to said current location.

**163.** A method as claimed in claim 150, further comprising the steps of:
accessing a database of frequent locations visited by said user;
selecting a frequented location from said database;
determining directions from said destination to a selected frequent location; and
providing said directions to said user.

**164.** A method as claimed in claim 163, wherein said database is accessed only upon user request.

**165.** A method as claimed in claim 163, wherein said database contains a location of a home for said user.

**166.** A method as claimed in any of claims 125 to 165, further comprising the step of generating a map identifying at least one location for a facility associated with said address.

**167.** A method as claimed in claim 166, further comprising the step of designating a location on said map which is closest to said current location.

**168.** A method as claimed in claim 167, further comprising the step of selecting one location identified on said map as a destination.

**169.** A method as claimed in claim 168, further comprising the step of generating directions from said current location to said destination.

**170.** A method as claimed in any of claims 166 to 169, further comprising the steps of:
selecting one location identified on said map as a destination;
saving said selected destination;
recalling said selected destination;
and generating directions from a current location to said destination.

**171.** A method as claimed in claim 170, wherein said step of recalling said destination occurs at a time later than a time at which said destination was saved.

**172.** A method as claimed in claim 170 or claim 171, wherein said location identified as a destination is indicated on said map by a star.

**173.** A method as claimed in claim 150, wherein said communications link further comprises an Internet link and said online information provider is accessed via an Internet site.

**174.** A method as claimed in claim 150, wherein said communications link further comprises a communications link via a private network.

**175.** A method as claimed in Claim 150, wherein said communications link further comprises a communications link via AOL® with said online information provider.

**176.** A method as claimed in Claim 150, wherein said communications link further comprises a communications link via a public network.

**177.** A method as claimed in Claim 150, wherein said communications link further comprises a communications link via the ONSTAR® system with an online information provider.

**178.** A method for providing information from an information source to a user, including directions from a first location to a destination, in response to an address received by said user in an electronic signal, said method comprising the steps of:
receiving a request from a user for information, said request containing an identification of a first location and an address received by said user in conjunction with an electronic signal;
identifying a destination associated with said address based upon said first location; and
transmitting a response to said user, said response containing an identification of at least one destination.

**179.** A method as claimed in claim 178, wherein said request for information is received at a data processing centre.

**180.** A method as claimed in claim 179, wherein said request is received by an operator at said data processing centre.

**181.** A method as claimed in claim 179, wherein said request for information is received by said data processing centre as a combined signal, said combined signal providing said identification of a first location and said address.

**182.** A method as claimed in claim 178, wherein said address identifies an online information provider.

**183.** A method as claimed in claim 182, wherein said online information provider is accessed via a communications connection between said online information provider and said data processing centre.

**184.** A method as claimed in claim 183, wherein said communications connection further comprises at least one connection selected from: an Internet connection, a private network connection, a public network connection, and a dial-up connection.

**185.** A method as claimed in claim 182, wherein said online information provider is co-located with said data processing centre.

**186.** A method as claimed in claim 178, wherein said first location identifies a current location of said user.

**187.** A method as claimed in claim 186, wherein said current location is determined utilizing GPS.

**188.** A method as claimed in claim 186, wherein said current location is determined utilizing at least one position determination selected from: DME determinations, Loran measurements, 911 based measurements, intersection identification, landmark designations, street address designations, latitude and longitude measurements, and time, distance and direction calculations from a known location.

**189.** A method as claimed in claim 178, wherein said first location identifies a fixed way point.

**190.** A method as claimed in claim 189, wherein said fixed way point designates a location for said user's home.

**191.** A method as claimed in claim 178, wherein said step of identifying a destination associated with said address based upon said first location further comprises the steps of:
accessing a data file designated by said address; and
selecting from said data file a destination based upon said first location.

**192.** A method as claimed in claim 191, wherein said data file further comprises an Internet site hosted by an Internet Service Provider.

**193.** A method as claimed in claim 191, wherein said destination is selected based upon a parameter selected from: commuting time, commuting distance, and a recommended route.

**194.** A method as claimed in claim 178, wherein said response further comprises an identification of at least one destination on a map.

**195.** A method as claimed in claim 178, wherein said method further comprises the step of:
determining directions from said first location to a destination.

**196.** A method as claimed in claim 195, wherein said response includes said directions.

**197.** A method as claimed in claim 178, wherein said response includes an identification of at least one destination on a map.

**198.** A data processing centre comprising:
a communications device;
a data file access device; and
a data processor;
whereupon receiving from a user a designation of a first location and an address via said communications device, said data processor directs said data file access device to retrieve a data file identified by said address which provides an identification of an least one destination, determines at least one destination based upon the contents of said data file and said first location, and returns a result of said determination, via said communications device, to said user.

**199.** A data processing centre as claimed in claim 198, wherein said communications device facilitates the establishment of wireless communications links between said user and said data processor.

**200.** The data processing centre as claimed in claim 198, wherein said data file access device establishes a communications link with an online information provider identified by said address and retrieves said data file from said online information provider.

**201.** A data processing centre as claimed in claim 200, wherein said communications link comprises a connection established utilizing at least one from: the Internet, a private network, a public network, and a dial-up connection.

**202.** A data processing centre as claimed in claim 198, wherein said data processor further comprises a customer service representative and said data file access device further comprises a computer workstation, wherein said customer service representative, upon receiving from said user a designation of a first location and an address, utilizes said computer workstation to retrieve an identification of at least one destination identified by said address in a data file and communicate to said user said destination.

**203.** A data processing centre as claimed in claim 202, wherein said customer service representative provides to said user directions from said first location to a destination.

**204.** A data processing centre as claimed in 203, wherein said directions are communicated electronically to said user.

**205.** A data processing centre as claimed in claim 198, wherein said data processor further comprises an automated data processing centre which automatically receives requests.

**206.** A computer system for determining a destination based upon a current location and an address provided in conjunction with an electronic signal, comprising:
a communications component that establishes communications connectivity between a user and said computer system, and said computer system and at least one online information provider;
an address processing component that determines which online information provider to contact based upon an address received from said user, establishes a connection with said online information provider via said communications component, and retrieves a listing of at least one destination associated with said online information provider;
a destination selection component that receives said listing of at least one destination from said address processing component and identifies at least one destination as a final destination; and
a mapping component that receives said final destination and said current location, generates directions from said current location to said final destination, and provides a result of said direction generation to said communications component for communication to said user.

**207.** A computer system as claimed in claim 206, wherein said communications component controls the operation of a modem provided in said computer system.

**208.** A computer system as claimed in claim 206, wherein said address processing component further comprises a Web browser which establishes via said communications component connectivity between said computer system and at least one online information provider via a connection from: an Internet connection, a private network connection, a public network connection, and a dial-up connection.

**209.** A computer system as claimed in claim 206, wherein said destination selection component identifies a destination as said final destination based upon at least one parameter selected from: a commute time, a commute distance, and a recommended route between each of said destination and said current location.

**210.** A computer-readable medium including a program code, the program code including instructions for use in determining directions from a first location to a destination identified by an address received by a user in an electronic signal, wherein said program code comprises:
a data file of addresses; and
a data file of destinations corresponding to said addresses;
whereupon receiving said address, said destinations can be retrieved from said data file.

**211.** A computer-readable medium as claimed in claim 210, wherein said medium is one selected from the group consisting of: a compact disc, a digital versatile disc, a hard disc drive, random access memory, read only memory, a memory stick, an optical memory device, and a magnetic memory device.

**212.** A signal for transmitting information comprising:
a first portion identifying an address that a user received in conjunction with an electronic signal; and
a second portion identifying a first location.

**213.** A signal as claimed in claim 212, wherein said information further comprises a third portion identifying said user, such that a profile for said user may be generated based upon said user identification and said first portion.

**214.** A signal as claimed in 212, wherein said information is transmitted via a wireless telecommunications link.

**215.** A signal as claimed in claim 212, wherein said information is transmitted via a hard-wired connection.

**216.** A signal as claimed in claim 212, wherein said second portion further comprises a GPS based identification of a current location of said user.

**217.** A signal as claimed in claim 212, wherein said second portion further comprises an identification of a current location of said user based upon a location determined using one selected from the group consisting of DME determinations, Loran measurements, 911 based measurements, intersection identification, landmark designations, street address designations, latitude and longitude measurements, and time, distance and direction calculations from a known location.

**218.** A signal as claimed in claim 212, wherein said first portion identifies an address associated with an online information provider accessible via a connection selected from the group consisting of: an Internet connection, a private network connection, a public network connection, a direct hard-wired connection, and a dial-up connection.

**219.** A computer-readable data transmission medium utilized by a data processing center containing a data structure comprising:
A first portion identifying a destination associated with an address provided in conjunction with an electronic signal; and
a second portion providing directions from a first location to said destination.

**220.** A computer-readable data transmission medium as claimed in claim 219, wherein said second portion comprises directions provided on a map.

**221.** A computer-readable data transmission medium as claimed in claim 219, wherein said second portion comprises directions provided orally.

**222.** A computer-readable data transmission medium as claimed in claim 219, wherein said second portion comprises directions provided in a textual format.

**223.** A computer-readable data transmission medium as claimed in claim 219, wherein said data transmission medium is communicated from said data processing centre to a user over a wireless communications link.

**224.** A computer-readable data transmission medium as claimed in claim 219, wherein said data transmission medium is generated by a local storage device located at said data processing center and is transmitted from said local storage device to a user.

**225.** A computer-readable data transmission medium containing a data structure comprising a first portion identifying an address provided in conjunction with an electronic file and a second portion identifying at least one destination associated with said address.

**226.** A computer-readable data transmission medium as claimed in claim 225, wherein said first portion comprises an identification of each destination on map.

**227.** A method in a computer system for communicating destination information to a user's system in response to an address transmitted in conjunction with an electronic signal and received by said user's system, said method comprising:
receiving said address and a first location from said user's system;
in response to receiving said address:
establishing a communications connection with an online information provider associated with said address;
retrieving at least one destination provided by said online information provider; in response to receiving said first location;
determining which of said retrieved destinations is closest to said first location; and
transmitting a result of said determination to said user's system.

**228.** A method as claimed in claim 227, wherein said method further comprising the steps of transmitting each destination provided by said online information provider to said user's system.

**229.** A method as claimed in claim 227, wherein said step of determining which of said retrieved destinations is closest to said first location is determined based upon at least one variable selected from: commute distance, and preferred route.

**230.** A method as claimed in claim 227, wherein said first location is based upon a location measurement accomplished using at least one selected from: GPS measurements, DME determinations, Loran measurements, 911 based measurements, an intersection identification, landmark designations, street address designations, latitude and longitude measurements, and time, distance and direction calculations from a known location.

**231.** A user interface providing an interface between a user and an access system, wherein said access system receives an address transmitted in conjunction with an electronic signal and a first location, and provides to said user an indication of a destination associated with said address based upon said first location, said user interface comprising:
a user input device; and
a user output device.

**233.** A user interface as claimed in claim 231, wherein said user input device is selected from: a keyboard, a pushbutton, a computing device, microphone, voice recognition system, and a mouse.

**234.** A user interface as claimed in claim 231, wherein said user output device is selected from: a flat screen display, LED display, printer, map generating device, television monitor, audio presentation and reception device, heads-up display, and a visual indicator.

**235.** A computer readable medium containing instructions for determining directions to a destination from a first location upon receiving an address in an electronic signal, by:
receiving a program and an address;
determining a current location of said user;
identifying a destination associated with said address;
generating directions from said current location to said destination; and
providing said directions to said user.

**236.** A computer readable medium containing instructions for providing information from an information source to a user, including directions from a first location to a destination, in response to an address received by said user in an electronic signal, by:
receiving a request from a user for information, wherein said request contains an identification of a first location and an address received by said user in conjunction with an electronic signal;
identifying a destination associated with said address based upon said first location; and transmitting a response to said user, said response containing an identification of at least one destination.
